# EUROPEAN PATENT SPECIFICATION

(11) **EP 0 953 197 B1**
(45) Date of publication and mention of the grant of the patent: **15.12.2004**
(21) Application number: 97944587.1
(22) Date of filing: 30.09.1997
(51) Int. Cl.: H01G 9/042, H01G 9/155, H01M 4/00

(54) **HIGH SURFACE AREA METAL OXYNITRIDES FOR ELECTRICAL ENERGY STORAGE**
METALLOXYNITRIDE MIT HOHER SPEZIFISCHER OBERFLÄCHE ZUM SPEICHERN VON ELEKTRISCHER ENERGIE
OXYNITRURES DE METAL, A SURFACE UTILE IMPORTANTE ET DESTINES AU STOCKAGE DE L'ENERGIE ELECTRIQUE

(30) Priority: 09.12.1996 US 761837
(43) Date of publication of application: 03.11.1999
(73) Proprietor: Ultracap Technologies Corporation, Judung Jen Hsinchu (TW)
(72) Inventor: DENG, Charles, Z., Hutchinson, MN 55350 (US); TSAI, Keh-Chi, Saratoga, CA 95070 (US); GHANTOS, Dania, San Jose, CA 95128 (US)
(74) Representative: Paget, Hugh Charles Edward
(86) International application number: PCT/US1997/017612
(87) International publication number: WO 1998/014970

(56) References cited:
- WO-A-95/26833
- WO-A-96/19003
- DE-A- 3 210 420
- GB-A- 730 160
- US-A- 4 851 206
- D. FINELLO: "New developments in ultracapacitor technology" 4TH INTERNATIONAL SEMINAR ON DOUBLE LAYER CAPACITORS AND SIMILAR ENERGY STORAGE DEVICES, 12-14 DECEMBER 1994, DEERFIELD BEACH, FLORIDA, US, vol. 4, pages 1-8, XP002051892 cited in the application
- PATENT ABSTRACTS OF JAPAN vol. 16, no. 263 (E-1216), 15 June 1992 & JP 04 061109 A (KOBE STEEL), 27 February 1992,
- PATENT ABSTRACTS OF JAPAN vol. 15, no. 379 (E-1115), 25 September 1991 & JP 03 150820 A (NIPPON CHEMICON CORP), 27 June 1991,
- C.H. SHIN ET AL.: "Preparation and characterization of titanium oxynitrides with high specific surface areas" JOURNAL OF SOLID STATE CHEMISTRY, vol. 95, 1991, pages 145-155, XP002051893 cited in the application
- PATENT ABSTRACTS OF JAPAN vol. 14, no. 560 (E-1012), 13 December 1990 & JP 02 242563 A (TOSHIBA BATTERY CO), 26 September 1990,

## Description

This application is a continuation-in-part of U.S. Serial No. 761,837 filed December 9, 1996 and is also a continuation-in-part of U.S. Serial No. 727,821, filed September 30, 1996, which is a continuation-in-part of U.S. Serial No. 219,965, filed March 30, 1994, which claims priority on U.S. Phifippine Serial No. 93/5773, filed September 20, 1993 and which is also a continuation-in-part of U.S. Serial No. 947,414, filed September 18, 1992, now U.S. Patent 5,384,685, U.S. Serial No. 947,294, filed September 18,1992, now U.S. Patent 5,464,453, and U.S. Serial No. 958,506, filed October 7, 1992, now abandoned. It is also a continuation-in-part of and claims priority on PCT/US95/03985, filed March 30, 1995, which claims priority on U.S. Ser. No. 219,965, filed March 30, 1994 and U.S. Ser. No. 377,121, filed January 23, 1995.

The present invention concerns a process for the formation of a thin film of a porous metal oxynitride having a high surface area on the surface of an electrically conducting substrate. The metal chloride is dissolved in a volatile organic liquid, a substrate is coated with a film, the film is converted to the porous metal oxide which is then converted to the porous metal nitride or metal oxynitride. The thin layer metal oxynitride covered-substrate is useful for electrical energy storage as an electrode in a capacitor or battery configuration.
Energy Storage Devices --There has been significant research over the years, relating to useful reliable electrical storage devices, such as a capacitor or a battery. Large energy storage capabilities are common for batteries; however, batteries also display low power densities. In contrast, electrolytic capacitors possess very high power densities and a limited energy density. Further, carbon based electrode double-layer capacitors have a large energy density; but, due to their high equivalent series resistance (ESR), have low power capabilities. It would therefore be highly desirable to have an electrical storage device that has both a high energy density and a high power density.

Ultracapacitors provide one approach to meet the high power requirements for the advanced energy storage system for many uses, from cardiac pacemakers to cellular phones to the electric automobile. Until recently, the only packaged high power ultracapacitor material available for significant charge storage has been a mixed ruthenium and tantalum oxide (Z.W. Sun and K.C.Tsai, J. *Electrochem. Soc*. *Ext. Abs.,* vol. 95-2, pp. 73-76 (1995) and R. Tong et al., *United States Patent*, 5,464,453 (1995)). Unfortunately, ruthenium and tantalum oxide are expensive.

It would be useful to have a reliable long-term electrical storage device, and improved methods to produce the same. It would also be desirable to have an improved energy storage device with energy densities of at least 20-90 J/cc.

WO-A-95 26833 discloses an energy storage device using metal nitride and metal carbide coated electrodes.

Additional references of interest include, for example:

V. Hock, et al. US Patent No. 5,055,169 issued October 8, 1991; H. Beer US Patent no. 4,052,271 issued October 4, 1977; and A. Martinsons, et al. US Patent no. 3,562,008 issued February 9. 1971. J. Wilfred in US Patent No. 4,774,193, issued September 27, 1988; and

Maruyama et al in US Patent No. 4,764,181 issued August 16, 1988.

A number of reports are found in the art to produce various metal nitrides having high surface area. Metal nitrides of particular interest include molybdenum nitride, titanium nitride or iron nitride.

Some additional specific references in this art include the following:

PCT/US93/08803, filed 17 September 1993, Inventors: Tsai, K.C. et al., Int. Pub. No.: WO 94/07272, Int. Pub. Date: 31 Mar 1994.

PCT/US95/03985, filed 30 March 1995, Inventors: Tsai, K.C. et al., Int. Pub. No.: WO 95/26833, Int. Pub. Date: 12 Oct 1995.

PCT/US95/15994, filed. 11 December 1995, Inventors: L.T. Thompson et al., Int. Pub. No. WO 96/19003, Int. Pub. Date: 20 June 1996.

Robert R. Tong, et al., U.S. Patent No.: 5,464,453, Issued: Nov. 7, 1995.

Robert Tong et al., U.S. Patent No.: 5,384,685, Issued: Jan. 24, 1995.

Additional U.S. Patents of general interest include 4,515,763; 4,851,206; 5,062,025; 5,079,674; 4,327,400; and 5,185,679.

Molybdenum Nitride (Mo₂N, MoN) -- Low cost, high surface area, and conductive molybdenum nitride is a potential candidate as an alternative material for a high charge storage capacitor. Many reports appear in the literature which describe the formation of molybdenum nitride as a powder having high surface area. A number are listed below. However, none of these references disclose the formation of an adherent film of high surface area molybdenum nitride having improved adhesion on a substrate on a surface. The reaction of powdered molybdenum oxide (MoO₃) with ammonia (NH₃) is described to produce γ-molybdenum nitride (Mo₂N), which has a fcc structure with a surface area in excess 200 m²/g (L. Volpe and M. Boudart, *J. Solid State Chem.,* 59, 332 (1985)).

For molybdenum nitride production and testing, the following art is of interest:

D. Finello in "New Developments in Ultracapacitor Technology" reported at the Fourth International Seminar on Double Layer Capacitors and Similar Energy Storage Devices (Volume 4) December 12-14, 1994, Deerfield Beach, Florida reported a study of a molybdenum nitride sample. The molybdenum nitride was described as being prepared by treatment of the oxide film on the surface of a solid foil with ammonia at elevated temperatures. The results show that the nitride is marginally useful as a porous energy storage.

D. Finello in "Characterization of Molybdenum Nitride Electrodes" reported at the Fifth International Seminar on Double Layer Capacitors and Similar Energy Storage Devices, December 4-6,1995, Boca Raton, Florida describes the comparison of molybdenum nitrides formed by heating the molybdenum oxide film on the surface of a substrate with ammonia. MoCl₅ may be used as a starting material. The product Mo₂N is not pure and is contaminated with MoO₂ and MoN.

M. Wixom in "Non-Oxide Ceramic Electrodes", disclosed at the Fifth International Seminar on Double Layer Capacitors and Similar Energy Storage Devices, December 4-6, 1995, Boca Raton, Florida, Vol. 5 that certain metal nitride and metal carbide electrodes can be used for volumetric energy density and power density. Additional detail is not provided.

M. Goodwin in "PRI Ultracapacitors and Evaluation of Molybdenum Nitride" reported at the Fifth International Symposium on Double Layer Capacitors and Similar Energy Storage Devices, December 4-6, 1995, Boca Raton, Florida, in general that molybdenum nitride may make a useful electrode. The specific production of such an electrode was not disclosed or enabled.

L. Volpe and Boudart M. "Compounds of molybdenum and tungsten with high specific surface area". *Journal of Solid State Chemistry.* vol.59, 332-347 (1985).

L. Volpe and Boudart M. "Ammonia synthesis on molybdenum nitride". J. *Phys. Chem.* vol.90, 4874-4877 (1986).

G.S. Ranhotra, et al., "Catalysis over molybdenum carbides and nitrides II. Studies of CO hydrogenation and C₂H₆ hydrogenalysis". *Journal of Catalysis.* vol. 108, 40-49 (1987).

G.S. Ranhotra, et al., "Catalysis over molybdenum carbides and nitrides I. Catalyst characterization". *Journal of Catalysis.* vol. 108, 24-39 (1987).

E.J. Markel and Van Zee, J.W. "Catalytic hydrodesulfuriza-tion by molybdenum nitride". *Journal of Catalysis.* vol. 126, 643-657 (1990).

C.H. Jaggers, Michaels, J.N. and Stacey, A.M. "Preparation of high-surface area transition-metal nitrides: Mo₂N and MoN. *Chemistry of Materials.* vol. 2, 150-157 (1990).

J-G. Choi, Choi, D. and Thompson, L.T. "Preparation of molybdenum nitride thin films by N⁺ ion implantation". *J*. *Mater*. *Res.* vol. 7, 374-378 (1992).

L.T. Thompson, Colling, C.W., Choi, D., Demczyk, B.G. and Choi, J-G. "Surface and catalytic properties of molybdenum nitrides". *New Frontiers in Catalysis.* 19-24 (1992).

Jeong-Gil Choi. "Temperature-programmed desorption of H₂ from molybdenum nitride thin films". *Applied Surface Science.* vol. 78, 299-307 (1994).

R.S. Wise, and Markel, E.J. "Catalytic NH3-decomposition by topotactic molybdenum oxides and nitrides: Effect on temperature programmed γ-MO₂N Synthesis". *Journal of Catalysis.* vol. 145, 335-343 (1994).

K.L. Roberts and Markel, E.J. "Generation of MO₂N nanoparticles from topotactic MO2N Crystallites". *J. Phys. Chem.* vol. 98, 4083-4086 (1994).

R.S. Wise and Markel, E.J. "Synthesis of high surface area molybdenum nitride in mixtures of nitrogen and hydrogen". *Journal of Catalysis.* vol. 145, 344-355 (1994).

J-G. Choi, Curl, R.L. and Thompson, L.T. "Molybdenum nitride catalysts". *Journal of Catalysis.* vol. 146, 218-227 (1994).

B.G. Demczyk, Choi, J-G and Thompson, L.T. "Surface structure and composition of high-surface-area molybdenum nitrides". *Applied Surface Science.* vol. 78, 63-69 (1994).

E.P. Donovan and Hubler, G.K. "Ion-beam-assisted deposition of molybdenum nitride films." *Surface and Coatings Technology.* vol. 66, 499-504 (1994).

C.W. Colling and Thompson, L.T. "The structure and function of supported molybdenum nitride hydrodenitrogenation catalysts". *Journal of Catalysis.* vol. 146, 193-203 (1994).

C.H. Jaggers. "The preparation and characterization of high surface area transition metal nitrides". *U.M.I. Dissertation Services.* (1994).

M.S. Mudholkar and Thompson L.T. "Control of composition and structure for molybdenum nitride films synthesized using ion beam assisted deposition". J. *Appl. Phys.* vol. 77, 5138-5143 (1995).

H. Joon Lee, Choi, J-G, Colling, C.W., Mudholkar, M.S. and Thompson, L.T. "Temperature-programmed desorption and decomposition of NH₃ over molybdenum nitride films". *Applied Surface Science.* vol. 89, 121-130 (1995).

Titanium Nitride (TiN) -- Titanium nitride has a number of uses in the art. It is used to strengthen surfaces as a coating, as semiconductor layer and as electrode materials in electrical applications.

Some references of interest concerning titanium nitride include:

S.R. Kurts and Gordon, R.G. "Chemical vapor deposition of titanium nitride at low temperatures". *Thin Solid Films,* vol. 140, 277-290 (1986).

P. Mehta, Singh, A.K. and Kingon, A.I. "Nonthermal microwave plasma synthesis of crystalline titanium oxide & titanium nitride nanoparticles". *Mat. Res. Soc. Symp. Proc.* vol. 249, 153-158 (1992).

E.O. Travis and Fiordalice, R.W. "Manufacturing aspects of low pressure chemical-vapor-deposited TiN barrier layers". *Thin Solid Films.* vol. 236, 325-329 (1993).

Y.W. Bae, Lee, W.Y., Besmann, T.M., Blau, P.J. and Riester, L. "Synthesis and selected micro-mechanical properties of titanium nitride thin films by the pyrolysis of tetrakis titanium in ammonia". *Mat. Res. Soc. Symp. Proc.* vol. 363, 245-250 (1995).

H. Rode, and Hlavacek, V. "Detailed kinetics of titanium nitride synthesis". *AlchE Journal.* vol, 41, 377-388 (1995).

K-T. Rie, Gebauer, A., Wohle, J., Tonshoff, H.K. and Blawit, C. "Synthesis of TiN/TiCN/TiC layer systems on steel and cermet substrates by PACVD". *Surface and Coating Technology.* vol. 74-75, 375-381 (1995).

J.N. Musher, and Gordon, R.G. "Atmospheric pressure chemical vapor deposition of titanium nitride from tetrakis (diethylamido) titanium and ammonia". J. Electrochem. Soc. 143, 736-744 (1996).

In these applications, titanium oxide is used to produce the titanium nitride. The surface area is usually low and the electrical storage capacities are marginal.

### Iron Nitride (FeN) -- Iron nitride is described in few references.

For iron nitride production, the following art is of general interest:

A. Tasaki, Tagawa, K., Kita, E., Harada, S. and Kusunose, T. "Recording tapes using iron nitride fine powder". *IEEE Transactions on Magnetics.* vol. MAG-17, 3026-3031 (1981).

K. Tagawa, Kita E. and Tasaki, A. "Synthesis of fine Fe₄N powder and its magnetic characteristics". vol. 21, 1596-1598 (1982).

M. Kopcewicz, Jagielski, J., Gawlik, G. and Grabias, A. "Role of alloying elements in the stability of nitrides in nitrogen-implanted α-Fe". *J. Appl. Phys.* vol. 78, 1312-1321 (1995).

D.C. Sun, Lin, C., Jiang, E.Y. and Wu, S.W. "Multiphase iron nitride gradient films". *Thin Solid Films.* vol. 260, 1-3 (1995).

K.H. Jack. "The synthesis and characterization of bulk α"-Fe₁₆N₂". *Journal of Alloys and Compounds.* vol. 222, 160-166 (1995).

T. Chuijo, Hiroe, K., Matsumura, Y., Uchida, H. and Uchida, H.H. "Reactivity of N₂ with Fe in FeNₓ formation by activated reactive evaporation process". *Journal of Alloys and Compounds.* vol. 222, 193-196 (1995).

F. Malengreau, Haulier, V., Vermeersch, M., Sporken, R. and Caudano, R. "Chemical interactions at the interface between aluminum nitride and iron oxide determined by XPS". *Surface Science,* vol. 330, 75-85 (1995).

None of these is art or in any configuration teaches or suggests the present invention.

Additional references of general interest include U.S. Patents 3,718,551; 4,816,356; 4,052,271; 5,055,169; 5,062,025; 5,085,955; 5,141,828; and 5,268,006.

The metal oxynitrides have been studied, usually for use as a dense coating to provide chemical and physical resistance to surfaces.

Titanium nitride (TiN) has been studied extensively because of its many useful applications. It is already used as a wear-resistant coating on tools, as a gold substitute for decorative coatings and for thin film resistors. Its metallic conductivity and refractory stability make it the material of choice for diffusion barrier in microelectronics applications. S. Kurtz et al. in Thin Solid Films vol. 140, p. 277 (1986) measured 3*µ*m TiN film that had 8.5 Moh's hardness scale, on which diamond is 10. It has the resistivity of 55 µΩ cm. Most of TiN thin films are produced by chemical vapor deposition (see, for example J.N. Musher et al. J. Electrochem Soc., vol. 143, p. 277 (1996), E.O. Travis, et al., Thin Solid Films, vol. 236, p. 325 (1993) and K.-T. Rie, et al., Surface and Coating Tech., vol. 74-75, p. 375 (1995)): ${\text{2TiCl}}_{\text{4}} {\text{+ N}}_{\text{2}} {\text{+ H}}_{\text{2}} \text{→2TiN + 8HCl 900-1200 °C}$${\text{6TiCl}}_{\text{4}} {\text{+ 8NH}}_{\text{3}} {\text{→6TiN + 24HCl + N}}_{\text{2}} \text{500°C}$

Titanium Oxynitride (TiNO) is a stable intermediate chemical product between titanium oxide and titanium nitride. These thin films of TiNO formed by sputtering are used as an anti-reflection coating (T.R. Pampalone, et al., J. Electrochem Soc., vol. 136, p. 1181 (1989)) and/or a diffusion barrier (N. Kumar. et al. Thin Solid Films, vol. 153, p. 287 (1987)). Only gas nitriding of titanium dioxide (TiO₂) produces high surface area titanium oxynitride ((C.H. Shin, et al., Journal Solid State Chemistry, vol. 95, p. 145 (1991)). H. Teraoka, et al., in Japanese Patent 89 - 60729 describe that the titanium oxynitride is obtained by the reduction of TiO₂ in nitrogen atmosphere.

Additional references for TiNO include:

C.H. Shin, et al., Journal of Solid State Chemistry, vol. 95, 145-155 (1991) disclose the preparation and characterization of titanium oxynitride having high specific surface area.

R. Marchand, et al., U.S. Patent 4,964,016 disclose multi-layer ceramic capacitors having as the conductive elements therein, layers of perovskites containing oxygen and oxygen. However, these perovskite metal (1) metal (2) oxygen nitrogen structure compounds still have low conductivity. No capacitance data has been disclosed.

K. Kamiya, et al. in the Journal of Materials Sciences, vol. 22, p. 937-941 (1987) disclose the nitridation of TiO₂ fibers prepared by the sol-gel method.

The present invention provides a process to produce a lower cost, adhering layer of porous high surface area metal oxynitride on a sheet (foil) substrate.

The present invention concerns a process to produce a high surface area niobium oxynitride, tantalum oxynitride, vanadium oxynitride, zirconium oxynitride, titanium oxynitride or molybdenum oxynitride coated substrate for use as an electrical energy storage component in a capacitor or a battery configuration, which process comprises:
(a) coating one or both flat etched surfaces of a solid substrate, which substrate is in the form of a thin sheet, with a solution or a slurry of a metal halide selected from niobium halide, tantalum halide, vanadium halide, zirconium halide, titanium halide or molybdenum halide and a liquid volatile carrier to produce a thin surface film;
(b) contacting the metal halide surface film-carrier coated substrate of step (a) with oxygen, air, or combinations thereof at a temperature of between about 150 and 250° C for between about 5 and 60 min to convert the metal halide to metal oxide, respectively, as a thin film and to remove the liquid volatile carrier;
(c) repeating steps (a) and (b) as needed to obtain an accumulated thickness of metal oxide coating on the substrate, which accumulated metal oxide coating has a high surface area and the liquid volatile carrier is removed;
(d) heating the metal oxide film coated substrate of step (c) in oxygen, air or combination thereof at between about 160 and 240°C for between about 1 and 3 hr to convert at least about 95% of the metal chloride to metal oxide;
(e) slowly increasing the temperature of the metal oxide coated substrate at a rate of less than about 40°C per minute in a nitrogen atmosphere to between about 500 to 800°C;
(f) contacting the oxide coated substrate produced in step (e) with a nitrogen source selected from excess flowing gaseous ammonia, a mixture of ammonia gas and hydrogen gas, or a mixture of hydrogen gas and nitrogen gas at between about 500 and 800°C for between 1 and 6 hr which treatment converts about 95% or greater of the oxide coating to an niobium oxynitride, tantalum oxynitride, vanadium oxynitride, zirconium oxynitride, titanium oxynitride or molybdenum oxynitride layer, respectively, on the substrate, which oxynitride layer has a high surface area and is electrically conductive; and
(g) cooling to ambient temperature and recovering the high surface area metal oxynitride coated substrate produced in step (f).

In a preferred embodiment, the metal of the metal oxynitride is selected from molybdenum, niobium, tantalum, titanium, vanadium or zirconium, more preferably titanium or molybdenum.

The present invention also relates to a novel electrical storage device that has a high energy density, high power density, and long useful life time.

It is an object of the present invention to provide new methods for manufacturing the storage device.

It is also another object of the present invention to provide a reliable long-term electrical storage device, and improved methods to produce the same.

The above and other features of the present invention and the manner of attaining them, will become apparent, and the invention itself will be best understood, by reference to the following description and the accompanying drawings, wherein:
Figure 1 is a schematic representation of an exploded view of the preunit illustrating three cells and is equivalent to Figure 3 in U.S. Patent 5,384,685.
Figure 2 is a graphic representation of the cyclic voltammetry of TiNO in 3.5M sulfuric acid and in 1 M potassium hydroxide.
Figures 3A to 3F show scanning electron micrographs of three different TiNO samples. Figures 3A, 3B and 3C are each at 200 magnification. Figures 3D, 3E and 3F are each at 1000 magnification.
Figure 4 is a graphic representation of the capacitance in F/cm² and specific capacitance in versus BET specific surface area in m²/g for TiNO in 1 M potassium hydroxide.
Figure 5A is a spectrographic representation of the XRD data for TiNO for a fresh sample; Figure 5B is after 120 CV cycles (16 hrs) in 1 molar KOH, and Figure 5C is after 120 hrs CV cycles (16 hrs) in 3.5M sulfuric acid.
Figures 6A, 6B and 6C are scanning electron micrographs at 1000 magnification of the titanium oxynitride as a fresh sample, after 120 CV cycle in 1 M KOH and after 120 CV cycles in 3.5M sulfuric acid, respectively.
Figures 7A and 7B show scanning electron micrographs at 20 magnification for TiNO and 100 magnification for RuTaOₓ, respectively.

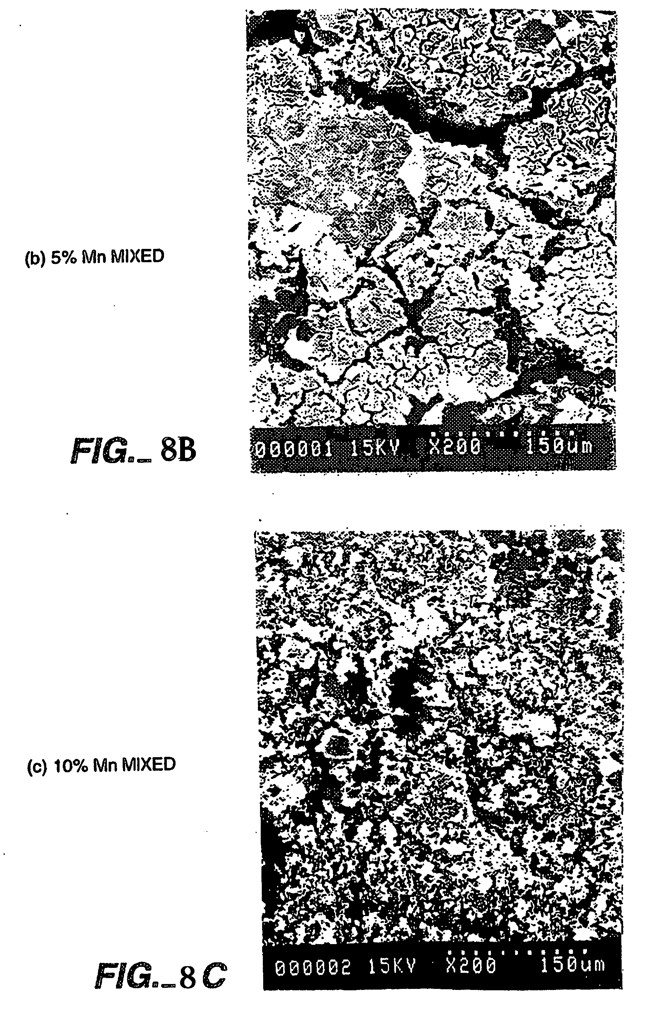

Figures 8A, 8B and 8C show scanning electron micrographs at 200 magnification of TiNO with 0%Mn, 5% Mn and 10% Mn, respectively.

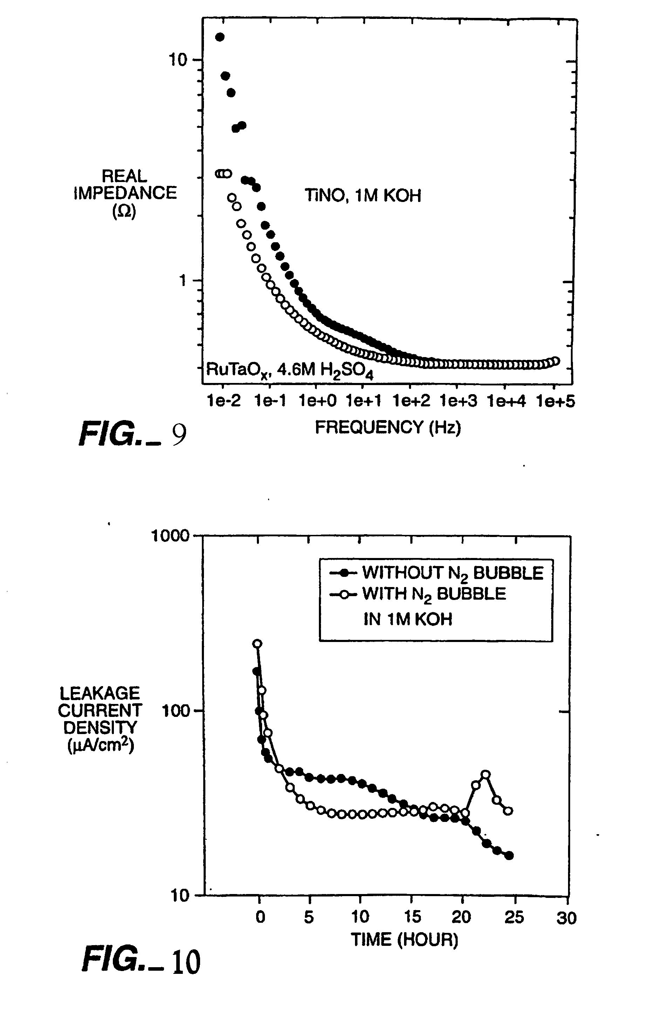

Figure 9 is a graphic representation of ESR for real impedance versus frequency in herz for TiNO in 1M potassium hydroxide and for RuTaOx in 4.6 M sulfuric acid.
Figure 10 is a graphic representation for the leakage current test in 1M potassium hydroxide for TiNO for leakage current density in µA/cm² versus time in hours.

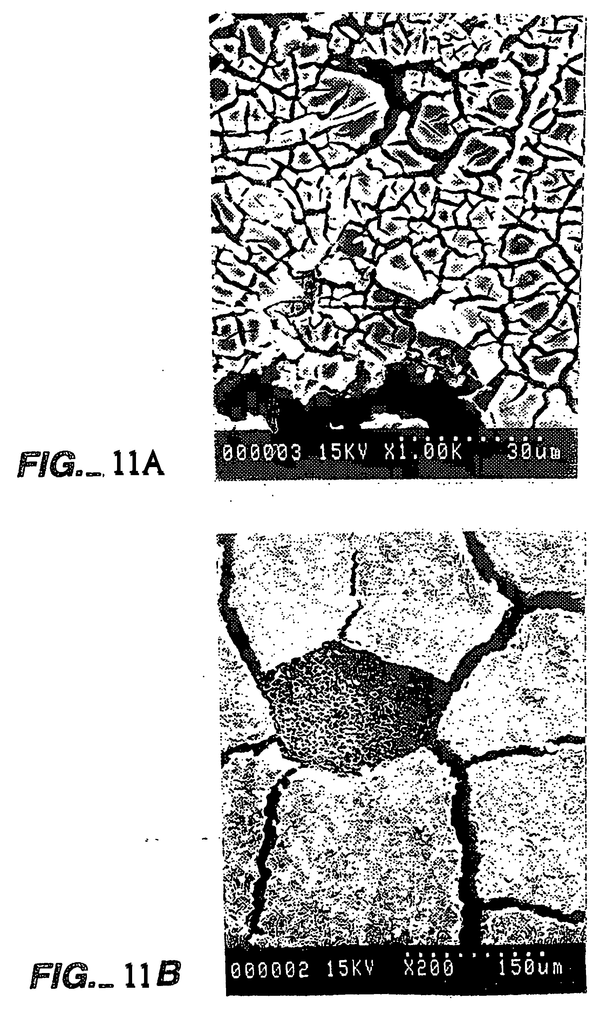

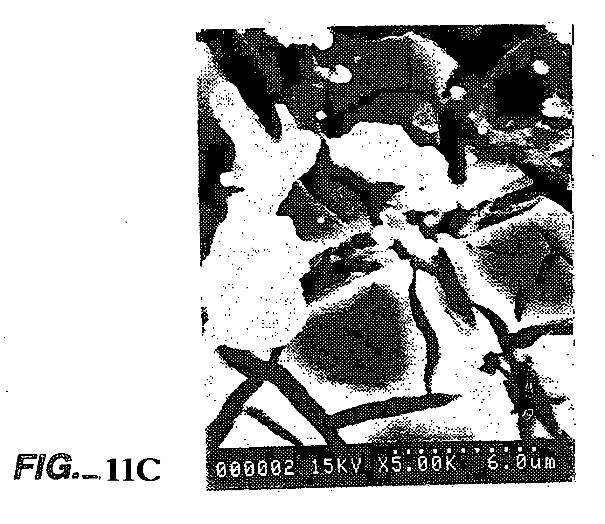

Figures 11A, 11B and 11C are scanning electron micrographs of TiNO for a fresh sample (11A) and after EDM cut, wash and dry (11B and 11C), respectively.
Figures 12A and 12B are scanning electron micrographs at 1000 magnification of TiNO and TiNO plus TiO₂, respectively.
Figure 13 is a graphic representation of a Ragone plot of TiNO single cell device of energy density of Wh/kg versus power density in watts/kg.
Figure 14 is a graphic representation of the TiNO stability test of capacitance in F/cm² versus cycles for CV materials, single cell device and for a five cell device.

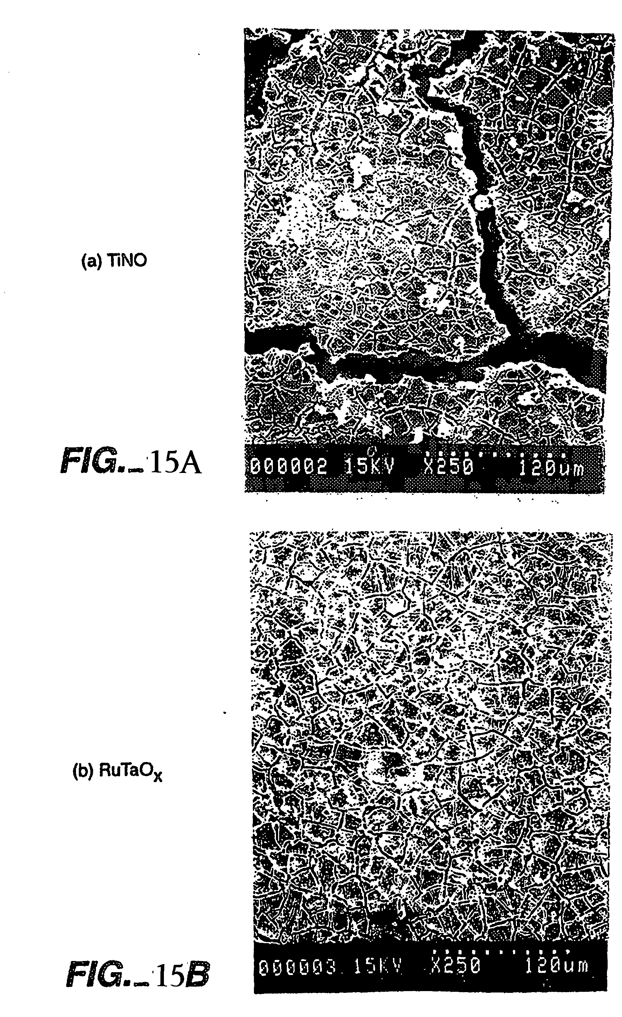

Figures 15A and 15B are scanning electronic micrographs at 250 magnification showing crack structure of TiNO and RuTaOx, respectively.
Figure 16 is a graphic representation of an aqueous 1.0 M LiCl single cell clamped test sample showing plots for test before and after leaking current test and wherein the sample is submerged within and also is removed from the electrolyte. Real impedance (in ohms) versus frequency (Hz) is shown. Capacitance in (F) is also plotted.
Figure 17 is a graphic representation of an aqueous 1.0M LiCl single cell clamped test sample showing the same variables as described in Figure 16.
Figure 18 is a graphic representation of a single cell test sample in aqueous 1.0M LiCl and in 1.0 M KOH for an 18 hr test which plots leakage current (in mA) versus, time (in hr.).
Figure 19 is a graphic representation of a single cell devices for performance degradation of discharge capacitance which plots capacitance (in Farads) versus various types of electrolytes over discharge cycles 500-5000, 1.0M KCI, 1.0M KCI (with a glass separator, and 1.0M CsCl.
Figure 20 is a graphic representation of a single cell device for performance degration of discharge energy. The discharge energy in Joules is plotted versus cycles (500-5000). The electrolytes are aqueous solutions of 1.0M LiCl 1.0M KOH, 6.0M KOH, 1.0M KCI, 1.0M KCl (with a glass separator) and 1.0M CsCI.
Figure 21 is a graphic representation of TiNOₓ electrodes AC impedance data which plots real impedance (in ohms) versus frequency (Hz). Capacitance in Farads is also plotted. The aqueous solutions include 1.0M KOH, 6.0M KOH, 1.0M KCI (cap), 1.0M KCI gls, 1.0M LiCl; 1.0M CsCl, 1.0M, CsCl (real), 1.0M KCl (real), 1.0M KCI gls (real) 1.0M KCI (real), 6.0M KOH (real), and 1.0M (real).
Figure 22 is a graphic representation of TiNO electrodes for an 18 hour leakage current test for a single cell device clamped sample in various electrolytes leakage current (*µ*A) is plotted versus time (hr).
Figure 23 is a bar graph comparative representation for a single cell device for ESR (beginning) and ESR (end) at 1000 Hz (in ohms) for various electrolytes.
Figure 24 is a bar graph comparative representation for a single cell sample for capacitance (charged) and capacitance (discharged) for various electrolytes.
Figure 25 is a bar graph representation which compares the energy of a single cell samples for a charged electrode and for a discharged electrode using various electrolyte compositions and concentrations.
Figure 26 is a bar graph representation which compares the charge efficiency and energy efficiency of a single cell sample for various electrolyte compositions and concentrations.
Figure 27 is a graphic representation of two TiNO devices tested as single cells, which plot ESR (in ohms) versus F (Hz).
Figure 28 is a graphic representation of a TiNO device tested as 5-cells which plots ESR (in ohms) versus Frequency (Hz). Capacitance (Farad) is also plotted.
Figure 29 is a graphic representation of three cell devices of TiNO which plots leakage current (*µ*A/cm²) versus time in minutes.
Figure 30 is a graphic representation of a TiNO material which plots current (mA) versus voltage (V v. SHE).
Figure 31 is a graphic representation of a 5-cell TiNO device in 1.0M KCI at various charging voltages. which plots charge (m A Hour) versus cycles (0 to 1000).
Figure 32 is a graphic representation of a 5-cell TiNO device in 1.0M KCl at various charging voltages which plots Energy (mWHs) versus cycles (0 to 1000).
Figure 33 is a graphic representation of the test of various 5-cell devices which plots real impedance (ohm) versus frequency (Hz). Capacitance in Farads is also plotted.
Figure 34 is a graphic representation of the test of three 5-cell devices which plots current density (µA/cm²) versus time (hr).
Figure 35 is a graphic representation of the cycle test of various 5-cell devices which plots discharge energy (Joules) versus cycles (0 to 5000). Discharge capacitance in Farads is also listed.
Figure 36 is a graphic representation of two devices using 1.0 KCl which plots real impedance (in ohms) versus frequency (Hz). Capacitance in Farads is also recorded.

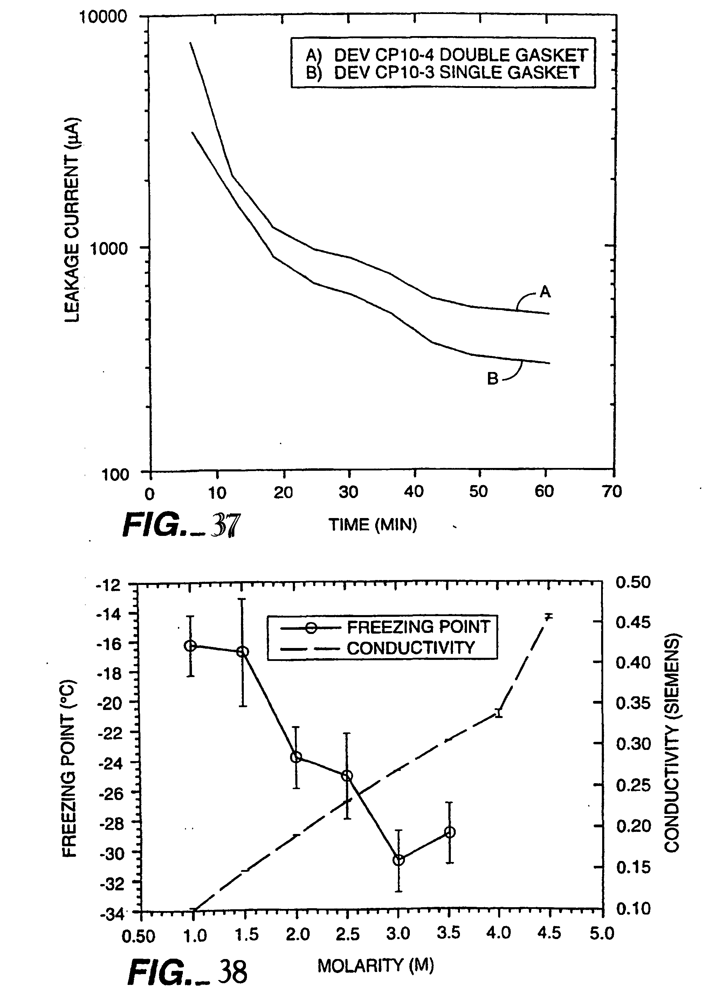

Figure 37 is a graphic representation of a test of two TiNO devices using a single and double gasket with 1.0M KCl at 10.0V plotting leakage current in *µ*A versus time in minutes.
Figure 38 is a graphic representation of the freezing point (°C) versus molarity (M) for KCI in aqueous solution. Conductivity in siemans is also plotted versus molarity.

The definitions of the following terms are not intended to be exclusive:

"Electrically conducting support material" refers to any electrically conducting metal or metal alloy, electrically conducting polymer, electrically conducting ceramic, electrically conducting glass, or combinations thereof. Metals and metal alloys are preferred for producing stock units. Preferred metals include, for example, the metals of the following preferred metal oxides listed for the following second electrically conducting materials. The support material should have a conductivity of greater than about 10⁻⁴ S/cm.

"Etched" or "Pretreated" substrate refers to a metal foil or sheet which has been cleaned as described in U.S. Patent 5,464,453, or by contact with a 6N HCl solution for 10-15 minutes or polished using mechanical polishing.

"Halide" refers to the starting material metal chloride, bromide or combinations thereof. Chloride is preferred.

"Liquid volatile carrier" refers to any organic liquid which has a boiling point at ambient pressure of about 200°C or below. Usually, only combinations of carbon, hydrogen, oxygen and nitrogen are present. Suitable carriers include, but are not limited to ethanol, propanol, butanol, pentanol, hexanol, cyclohexanol, diethyl ether, dioxane, tetrahydrofuran, dimethylacetamide, diethylacetamide, acetone, methylethyl ketone, butanone, ethyl acetate, propyl acetate, methylene chloride, chloroform, carbon tetrachloride, benzene, toluene, xylene, and mixtures thereof. Preferably, the alcohols are used, more preferably, ethanol and propanol.

"Second electrically conducting material" (having a high surface area) refers to a porous electrode coating which may be of the same or different composition on each side of the support material. Preferred metal oxides of the present invention include those independently selected from tin, lead, vanadium, titanium, ruthenium, tantalum, rhodium, osmium, iridium, iron, cobalt, nickel, copper, molybdenum, niobium, chromium, manganese, lanthanum, or lanthanum series metals or alloys or combinations thereof, and possibly containing additives like calcium to increase electrical conductivity.

"Electrolyte" refers to an ionically conductive aqueous or non-aqueous solution or material, which enables the dry preunit to be electrically charged.

"Cab-O-Sil®" refers to silica filler available from Cabot Corporation of Tuscola, Illinois. A variety of sizes are available.

"Epoxy" refers to the conventional definition of the product which is an epoxy resin mixed with a specific curing agent, usually a polyamine or polyepoxide mixed with a polyamine curing agent.

MYLAR® refers to a polyester of polyethylene terephthalate of DuPont, Inc. of Wilmington, Delaware. It is usually commercially available in sheet form of varying thicknesses.

"Metal oxynitride" refers to any electrically conducting metal oxynitride of metals of Groups III, IV, V, VI or VII of the Periodic Table. Preferably the metal is a transition metal. More preferably. the metal is independently selected from molybdenum, nobium, tantalum, titanium, vanadium, zirconium, or combinations thereof, and is especially titanium or molybdenum.

For the metal oxynitride, this structure does not describe a combination of MO₂, MO₃, MO₄, etc. with MN, M₂N, M₃N, MN₂ etc. MNO describes a general formula MₓN_{y}O_{z} wherein M is metal, preferably a transition metal wherein:
x is between 0.7 and 1.3, preferably between 0.9 and 1.1, more preferably about 1;
y is between about 0.7 and 1.3, preferably between about 0.9 and 1.1 and more preferably about 1; and
z is between about 0.7 and 1.3, preferably between about 0.9 and 1.1 and more preferably about 1.

For titanium oxynitride, this formula does not describe combinations of TiO₂, and TiN, or variations thereof. TiNO is a general formula Tiₓ N_{y} O_{z} wherein:
x is between 0.8 and 1.2, preferably about 1;
y is between about 0.8 and 1.2, preferably about 1; and
z is between about 0.8 and 1.2, preferably about 1.

"Metal oxide" refers to any electrically conducting metal oxide.

"Mixed metal oxide" refers to an electrically conducting oxide compound comprised of two or more metal oxides, optionally mixed with a non-conducting compound.

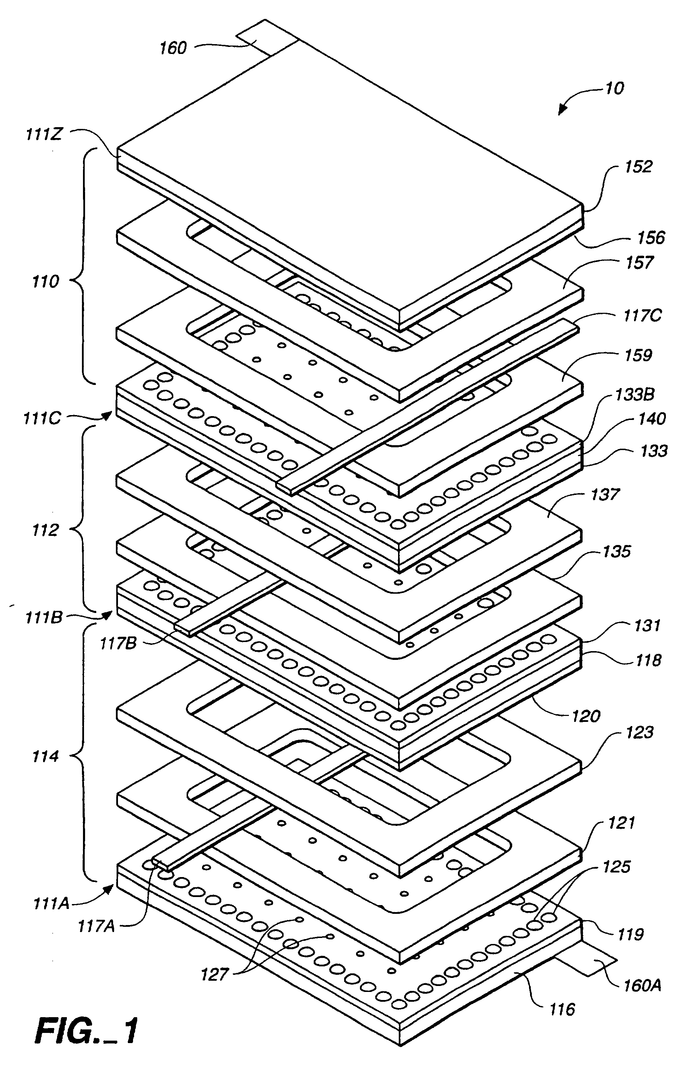

Referring now to the drawings, and more particularly to Figure 1 thereof, there is illustrated a dry preunit of energy storage device 10. The energy storage device is first an assembled dry preunit 10. After filling the present cells with an aqueous or non-aqueous electrolyte, the exterior surface is sealed (fused) (e.g. heat, uv), to form device which is then electrically charged.

The device preunit 10 generally includes a plurality of cells, such as the cells 110, 112 and 114, which are formed, prepared, and stacked. Figure 1A U.S. Patent 5,464,453 (not shown) illustrates an assembled view of the electrical storage device preunit, formed of twelve superposed cells. It should however be understood to those skilled in the art, after reviewing the present specification that any different number of cells can be used.

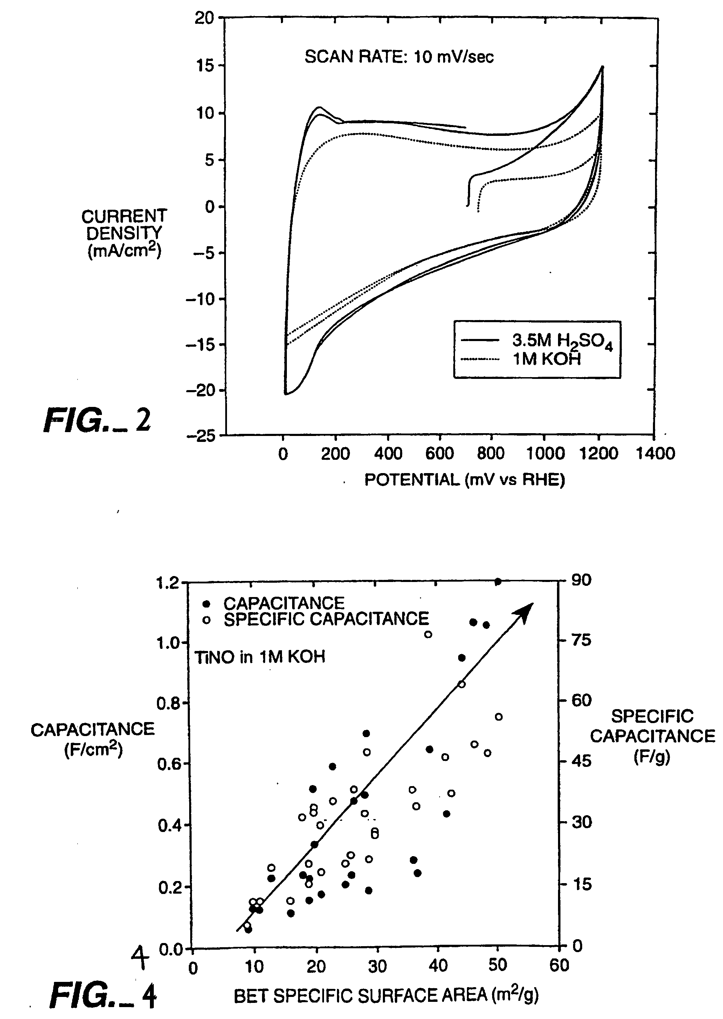

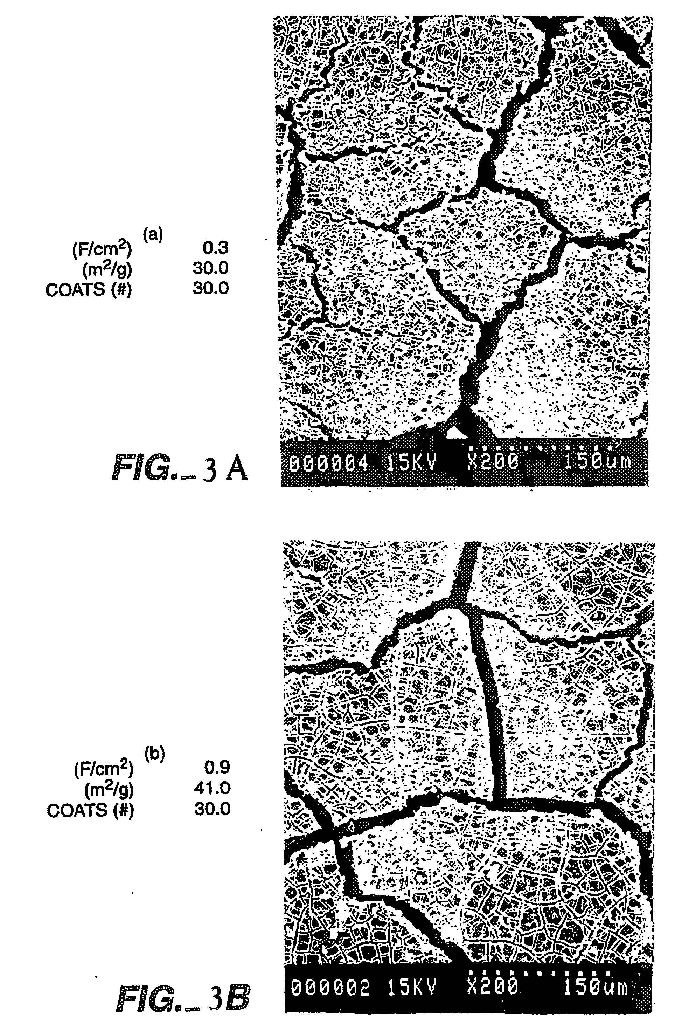

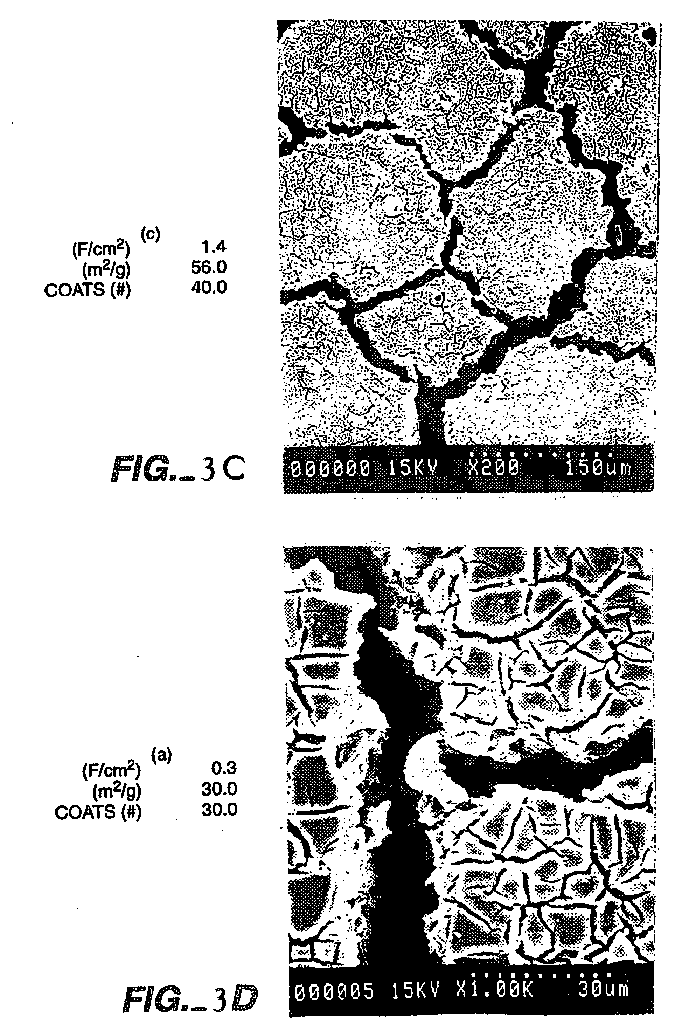

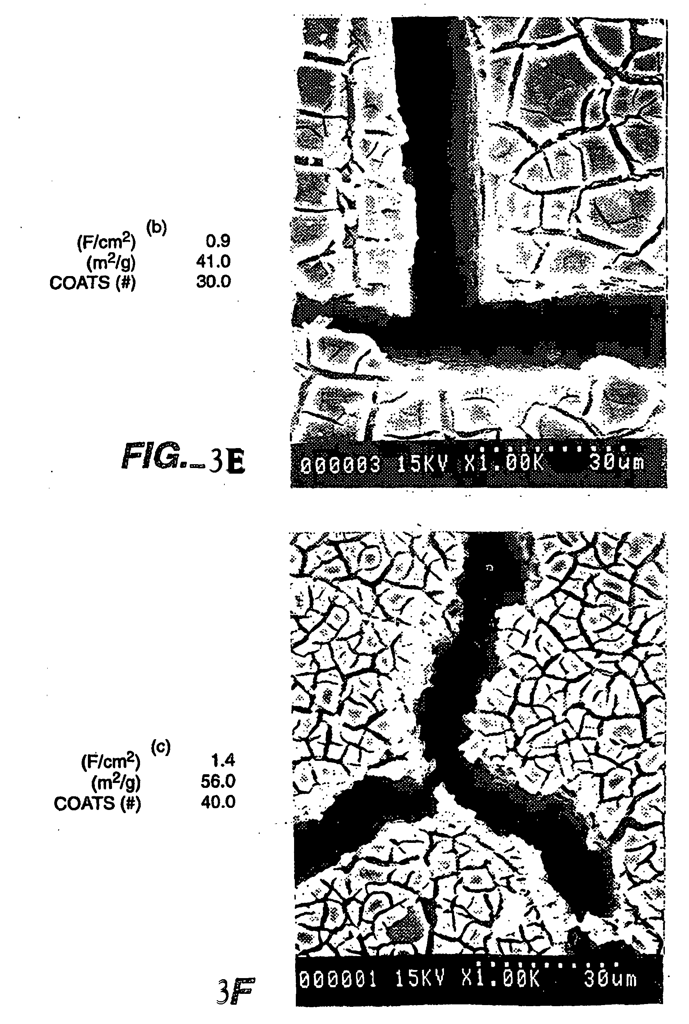

For simplicity of illustration, Figure 1 is an exploded view of the preunit 10, showing only three exemplary cells 110, 112 and 114. The cells have generally similar design and construction, and therefore, only the cells 114 and 112 are described in detail (in relation to Figures 2, 2A, and 3 of U.S. Patent 5,384,685).

The cell 114 includes a first electrically conductive external electrode or end plate 111A, and a second internal, electrically conductive bipolar electrode 111B. Both electrodes 111 A and 111B are spaced apart at the edges by means of two dielectric or electrically insulating gaskets 121 and 123.

When the first and second electrodes 111A and 111 B, and the insulating gaskets 121 and 123 and the electrically conducting porous material (oxide) layers 119 and 120 are bonded together to form the cell 114, a central air filled gap is formed by these elements. When the preunit 10 is ready to be used, the gap 130 is filled with an electrolyte (not shown) to produce device.

For this purpose, an exemplary access or fill port, and is formed between the gaskets 121 and 123, in order to allow the electrolyte to fill the gap. The fill port is formed by means of a tab or cord 117A, which is inserted between the gaskets 121 and 123, prior to fusing or bonding the gaskets 121 and 123. When the gaskets 121 and 123 are heated, the cord 117A becomes surrounded by the reflow gasket material, which causes the outline of fill port to be formed. The two gaskets become a fused polymer mass covering a minimum of the active electrically conducting coating layers 119 and 120.

The dry preunit is assembled according to the patents cited herein, primarily U.S. Patent 5,464,453. It is then evacuated and filed with appropriate liquid electrolyte and sealed to create the electrical storage device.

Considering now the electrodes 111A and 111 B in greater detail, the methods of manufacturing them will be described later. One difference between the electrodes 111A and 111B is that the electrode 111A optionally includes a tab 160A, for connection to a power source (not shown).

A further, but optional distinction between the electrodes 111A and 111B, is that the electrode 111A includes one porous electrically conductive coating layer 119, which is deposited on a support material or structure 116, while the bipolar electrode 111B includes two porous coating layers 120 and 131, which are deposited on either or both sides of the support material or structure 118. As such, the electrode 111B is a true bipolar electrode. It should be understood that both sides of the electrode 111 A are preferably coated with porous electrically conductive layers.

Yet another optional distinction between the electrodes 111A and 111B lies in the rigidity of the support structures 116 and 118. The electrode 111A, acting as an external end plate, should preferably have a more rigid construction, so that it imparts sufficient rigidity to the overall structure of the energy storage device. The electrode 111 B and other similar internal electrodes do not necessarily need to be as rigid as the external electrode 111 A. Nonetheless, when the device is large, additional support structure is required, and the internal electrodes, i.e. 111 B, are used as additional support structure. In this case, it is desirable to rigidify the internal electrodes, i.e. 111 B.

As a result, the support material 116 is generally thicker than the support material 118. In the preferred embodiment, the support material 116 has a thickness of about 10 mils (0.0254 cm), while the support material 118 has a thickness of about 1 mil (0.00254 cm). Other values could alternatively be selected.

The electrodes 111A, 111B and the remaining electrodes of the storage device are sized and dimensioned according to the desired application, without departing from the scope of the invention. For instance, in one application, the device is miniaturized, e.g. for a cardiac defibrillator. While in another application, the overall volume of the device is one cubic meter or even greater, e.g. for an electric vehicle. The dimensions of the electrodes determine the overall capacitance of the storage device.

Considering now the coating layers 119 and 120 in greater detail, the methods of forming them are described below. Preferably, the coating layer 119 includes a plurality of microprotrusions, while the coating layer 120 does not include such microprotrusions. It should be understood, however, that the coating layer 120 could alternatively be designed similarly to the coating layer 119.

Considering now the coating layer 120, it serves a similar function as the coating layer 119, and is deposited on the side of the electrode 111B, which faces the inner side of the first electrode 111A. In a preferred example, the coating layer 120 does not include microprotrusions. In an alternative example of the preunit 10, the coating layers 119 and 120 are similarly constructed, and include microprotrusion layers.

Considering now the gaskets 121 and 123, the methods of producing them will be described later. The gaskets 121 and 123 are generally identical, and are arranged in registration (adjacent and superposable) with each other. For brevity, only the gasket 121 will be described in greater detail. The gasket 121 includes a solid peripheral section and a hollow central section.

In a preferred example, the cord 117A, or a part thereof, is placed between the gaskets 121 and 123, and extends across the hollow section, of the gaskets, and protrudes outside the peripheral section. In another example, the cord does not extend across the central section of the gaskets, and only a part of the cord is sandwiched between the gaskets and extends beyond both edges of one side of the gasket.

Referring to Figure 1, a general description for the preferred method to produce the dry pre-unit 10 and of the filled and sealed energy storage device, is as described in U.S. Patent 5,464,453.

The porous coating thickness is between about 1 and 10,000 *µ*, preferably between about 1 and 200 *µ*, and more preferably between about 5 and 50 *µ*.

When the preunit device 10 is filled with an electrolyte, it becomes ready to be charged to become device 10A. The main criterion for the electrolyte is to be ionically conductive and have bipolar characteristics. The boundary or interface region between the electrode and the electrolyte is referred to in the field, as the "double layer", and is used to describe the arrangement of charges in this region. A more detailed description of the double layer theory is found in "Modern Electrochemistry", by Bockris et al, volume 2, sixth print, chapter 7 (1977).

The surface area of the coating layer affects the capacitance of the electrolyte-filled device. If for instance, the surface enhancement factor is between 1,000 to 20,000, and the double layer capacitance density is between about 10 to 500 microfarad per cm² of.the interfacial surface area (i.e. the BET surface area), then surface enhancement capacitance densities of about 0.1 to 10 farads/cm² for the projected surface area of the electrode are obtained. Although coating with any surface enhancement value are used, larger surface area coatings are more preferred because of the increased capacitance density. Coatings with surface areas between about 10 and 1000 m²/cc are preferred, and preferred values between about 20 and 200 m²/cc, more preferably about 100 m²/cc.

While the double layer theory is described herein, it should be understood that other theories or models, such as the proton injection model, could alternatively be used. Further, the exact surface area porosity and coating thickness can be adjusted and modified.

The high surface area (porous) electrically conducting coating material, i.e., metal oxynitride, is applied onto the support material.

It has been found that a number of pretreatments (conditioning) or combinations thereof are useful to improve the electrical characteristics of the coating (e.g. electrochemical inertness, conductivity, performance characteristics, etc.). These treatments include for example:
1. Steam - High temperature water or steam treatment controlled in atmospheres can be used to decrease the leakage current. A method procedure is to contact the coated electrode with water saturated steam in a closed vessel at between 150 and 325°C for between 1 to 6 hr. under autogenic pressure.
2. Reactive Gas - The coated electrode is contacted one or more times with a reactive gas such as oxygen, ozone, hydrogen, peroxides, carbon monoxide, nitrous oxide, nitrogen dioxide, or nitric oxide at between about ambient temperature and 300°C at a reduced pressure or under pressure. A preferred procedure is to contact the coated electrode with flowing ozone at between about 5-20 weight percent in air at between about ambient and 100°C and 0.1-2000 torr pressure for 0.1-3 hr.
3. Supercritical Fluid - The coated electrode is contacted with a supercritical fluid such as carbon dioxide, organic solvent, and/or water. A preferred procedure is treatment with supercritical water or carbon dioxide for 0.1-5 hrs by first raising the pressure then the temperature to supercritical conditions.
4. Electrochemical Treatment - The coated electrode is placed in an aqueous electrolyte. The electrode is then switched to a cathodic current and the open circuit potential is driven back to a potential of between about 0.5V - 0.75V, preferably between 0.5 and 0.6 and more preferably about 0.5 V (vs. NHE) with out hydrogen gas evolution.
5. Reactive Liquid - The coated electrode is contacted with an oxidizing liquid such as aqueous solutions of hydrogen peroxide, ozone, sulfoxide, potassium permanganate, sodium perchlorate, chromium (VI) species and/ or combinations thereof at temperatures between about ambient to 100 °C for 0.1-6 hr. A preferred procedure uses a 10-100 mg/l aqueous solution of ozone at 20-50 ° C for between a about 0.5-2 hr. followed by an aqueous wash. An additional procedure is to treat the coated electrode in a chromate or dichromate solution.

A number of post-conditioning reactive gas treatments of the stack or assembled stack or combinations thereof are useful to improve the overall and long term electrical characteristics of the electrode and resulting device. These include treatment with hydrogen, nitric oxide, carbon monoxide, ammonia, and other reducing gasses or combinations thereof at between ambient temperature and the Tₘ of the gasket material at a reduced pressure or under pressure.

A second post conditioning commonly done in the art is to adjust the open circuit potential of the electrode after step (F) and stack the electrode in an inert atmosphere (e.g. Ar, N₂). This is done by using a cathodic current without hydrogen evolution.

The dry preunit is filled with an ionically conducting aqueous or non-aqueous electrolyte and includes neutral alkali metal halide salts. One electrolyte is approximately 30% sulfuric acid in water due to the high conductivity. Non-aqueous electrolytes based on propylene carbonate and ethylene carbonate are also used to obtain larger than 1.2V/cell potentials.

A preferred procedure for filling the dry preunit with liquid electrolyte is to place the preunit in a chamber, evacuate the chamber between about 1 torr to 1 microtorr, preferably about 250 mtorr to less than 1 torr, and introduce the electrolyte; thereby, filling the cell gaps with electrolyte through the fill ports. Alternatively, the preunit may be placed in the electrolyte and a vacuum pulled; thereby causing the gas in the cell gaps to be removed and replaced by the electrolyte.

In addition, non liquid based electrolytes (e.g. solid and polymer) may be used. In those cases the electrode is coated with the electrolyte before reflow and a fill port is not required.

The electrode capacitance density (C' in units of F/cm²) is roughly 1 F/cm² for every 10 *µ*m of coating. Therefore, for large capacitance values a thicker coat is used. The device capacitance (C) is equal to the electrode capacitance density times the electrode area (A in units of cm²) divided by two times the number of cells (n) (equation 1).

The leakage current (i") is proportional to the electrode area, A' while the equivalent series resistance (ESR) is inversely proportional to the electrode area (eqn. 2). Typical values for i" are less than 20 *µ*A/cm².

The total number of cells in a device (n) is equal to the cell voltage (V') divided by the total device voltage (V) (eqn. 3). Cell voltages up to about 1.2 V can be used with aqueous based electrolytes.

The device height (h), based on a cell gap (h') and a support thickness (h"), is determined from the number of cells and the electrode capacitance density in units of cm by equation 4.

The device ESR is a function of the number of cells (n) times the cell gap (h') times the resistivity of the electrolyte (r) times a factor of about 2 divided by the area A' (equation 5).$\text{eqn. 1 C=C'A'/2n}$$\text{eqn. 2 i"} \text{a} \text{A'} \text{a} \text{1/ESR}$$\text{eqn. 3 n = V/V'}$$\text{eqn. 4 h/cm = n(0.002C' + h' + h")}$$\text{eqn. 5 ESR ≈ 2nh'r/A'}$

Devices are constructed to meet the requirements of various applications by considering the voltage, energy, and resistance requirements. The following examples are not meant to be limiting in any way:

For electric vehicle applications about a 100 KJ to 3 MJ device is used. A large voltage (about 100 to 1000 V) large energy (1-5 F/cm²) storage device is used with an electrode area of about 100 to 10,000 cm².

For electrically heated catalyst applications for the reduction of automobile cold start emissions about a 10 to 80 KJ device is used. This device is about 12 to 50 V constructed with around 100 to 1000 cm² area electrodes of 1-5 F/cm². Optionally, a device consisting of several devices in parallel can be constructed to meet the electrical requirements.

For defibrillator applications about a 200-400 V device with 0.5 to 10 cm² area electrodes of 1-3 F/cm² are used.

Metal (e.g., titanium) oxide formation condition is judged by BET surface area, SEM pictures, XRD results and CV performance of the metal (e.g., titanium) oxynitride. The optimized sample is pyrolyzed at 200°C for 2 hours annealing after dip coated in 1 M TiCl₄ IPA solution. There is no titanium dioxide peak in the XRD patterns and the biggest crack in SEM picture. Although pyrolysis of the oxide at 150°C shows the highest BET surface area, these samples create a rutile structure of titanium dioxide which can not be nitrided further at 700°C. Annealing at 300°C gives relatively lower capacitance, and annealing at 400°C gives very poor mechanical adhesion and low capacitance.

After six hours of reaction in NH₃ flowing (22.5 L/min) and H₂, (4.5 L/min flowing) gas atmosphere at 700°C at ambient pressure, the TiNO is produced. TiNO shows the BET specific surface area of 56 m²/g and the highest capacitance up to 1.51 F/cm², 79 F/g in 3.5M H₂SO₄ and 1.45 F/cm², 75 F/g in 1.0M KOH with a 1.2 voltage window from CV curves (see Figure 2). The active ultracapacitor material cost is estimated to be reduced to about sixty-two cents per kilo-Joule. XPS (ESCA) Material Composition Analysis

ESCA results of samples of TiNO after nitriding are listed in Table 1. Carbon is the contamination on the surface. Argon is used for etching. The nitriding conversion is 38% based on the calculation from oxide to nitride conversion in this table. The products after nitriding at the conditions described above are named as titanium oxynitride (TiNO).

**TABLE 1**

| ESCA analysis of TiNO | | | | | |
|---|---|---|---|---|---|
| Element | Ti | O | N | C | Ar |
| Atomic Percent | 30 | 35 | 21 | 13 | 1 |

Rutherford Backscatering Spectroscopy (RBS) Analysis and SEM Micrographs

The RBS result (Table 2) is consistent with the ESCA result for TiNO samples. The ratios of Ti:O:N are about 1:1:1. These data support the hypothesis of titanium oxynitride.

RBS analysis of the samples of different capacitance show the same atomic percentages of Ti, O and N. This implies that the capacitance is not related to the atomic percentages of the sample. It also shows no relation of sample composition with dip coating methods. Figures 3A to 3F show the SEM pictures of these three different capacitance samples, which reveal the different surface morphology.

**TABLE 2**

| RBS result of TiNO samples in atomic percentage | | | | | |
|---|---|---|---|---|---|
| Capacitance (F/cm²) | S.C. (F/g) | Surface Area (m²/g) | Ti (%) | O (%) | N (%) |
| 0.3 | 20 | 30 | 0.37 | 0.33 | 0.30 |
| 0.5 | 38 | 37 | 0.41 | 0.29 | 0.30 |
| 0.9 | 65 | 41 | 0.38 | 0.32 | 0.30 |
| 1.5 | 75 | 56 | 0.40 | 0.30 | 0.30 |

### Capacitance Effect by Surface Area -

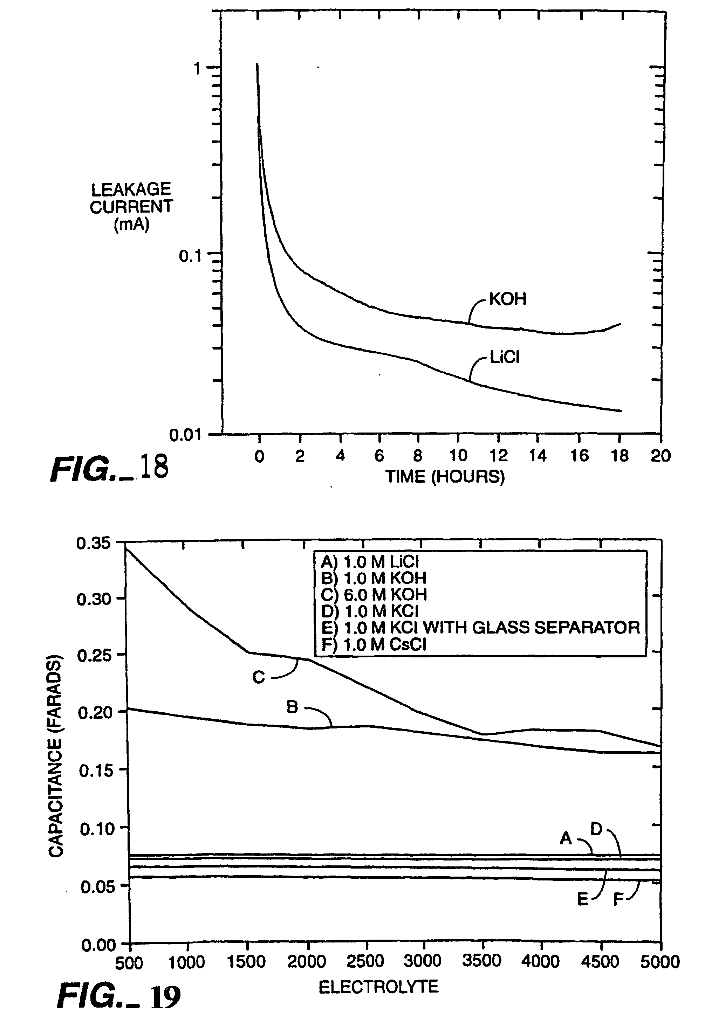

Although the capacitance is not related to the composition of the material, it is clear that the capacitance is related to the BET specific surface area from Table 2. Figure 18 reveals this fact that the capacitance is proportional to the material specific surface area by plot the data under different nitride reaction conditions. The titanium oxynitride shows the double layer capacitor phenomena. Comparison CV Cycles in Different Electrolytes - TiNO

The CV test starting material capacitance is 1.02 F/cm² in 1 M KOH, after 120 continuous CV cycles (16 hrs) the capacitance decreased to 0.80 F/cm² in 1M KOH, while the decrease was to 0.16 F/cm² in 3.5M H₂SO₄. The TiNO film seems to be stable only in alkaline solution.

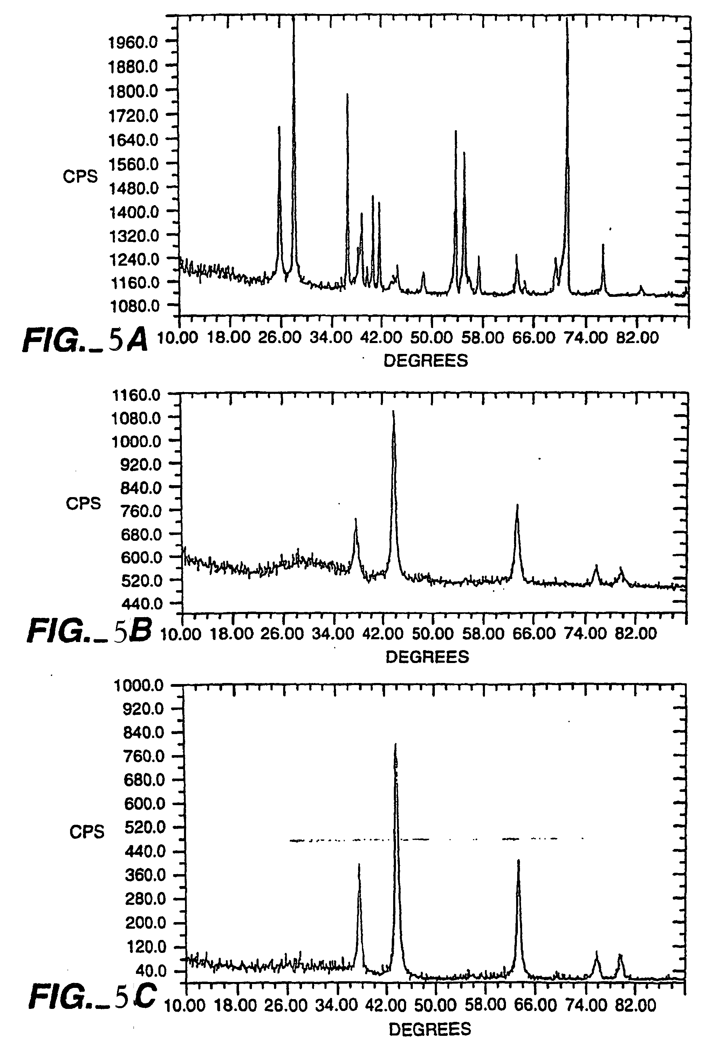

XRD result shown in Figure 5A is a titanium oxynitride fresh sample (a) and after 120 CV cycles in both acid solution (Figure 5B) and alkaline solution (Figure 7C). The peaks of fresh sample and the sample after 120 CV cycles in KOH solution show the peak position in between TiO and TiN. The sample after 120 CV cycles in 3.5M H₂SO₄ shows two types of titanium dioxide (rutile and anatase), as well as titanium metal.

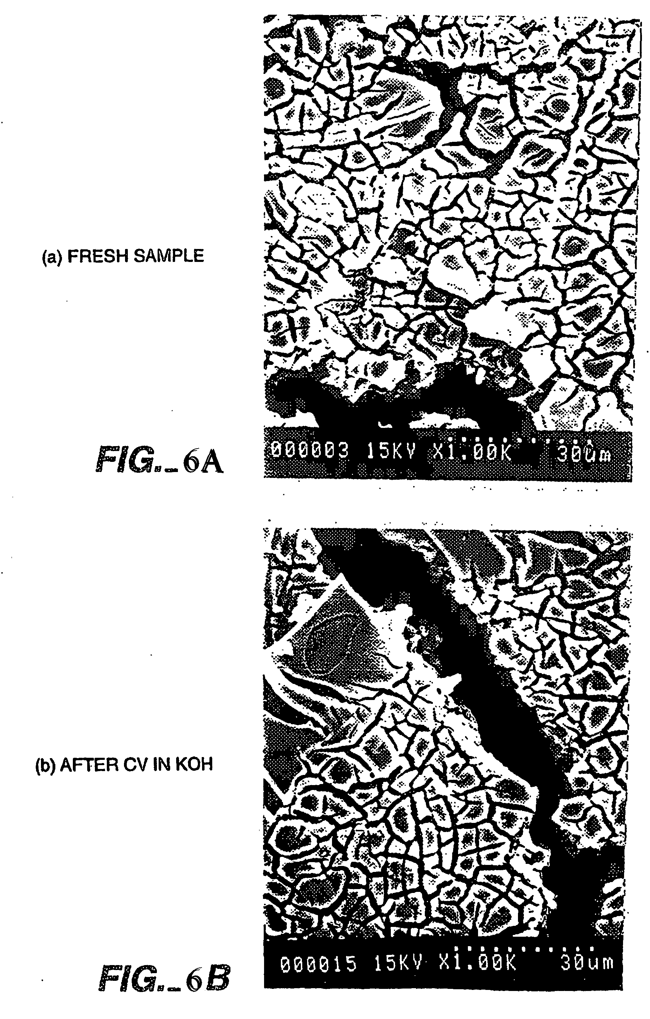

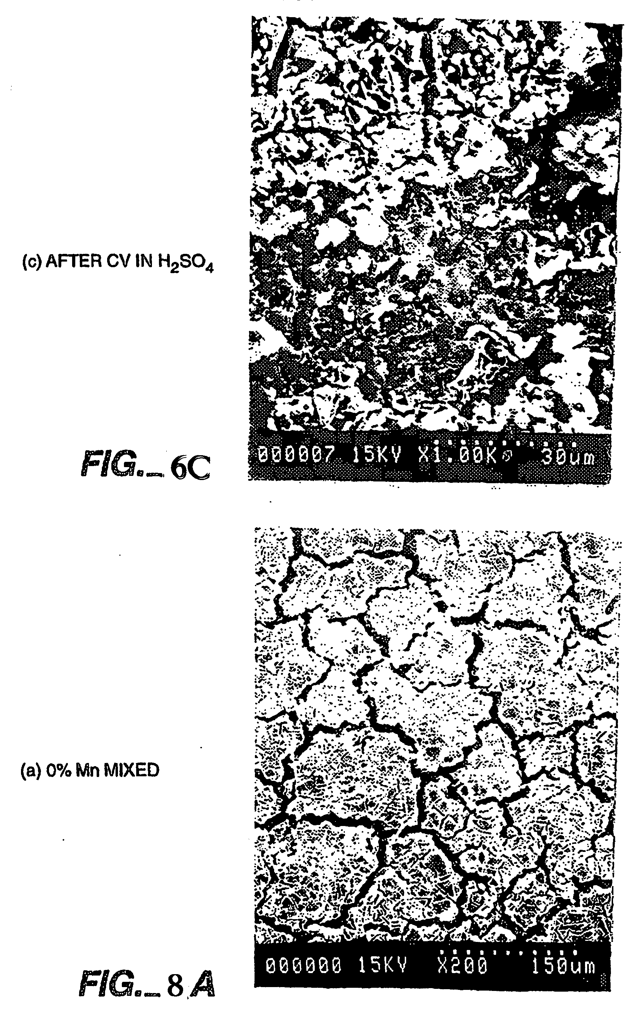

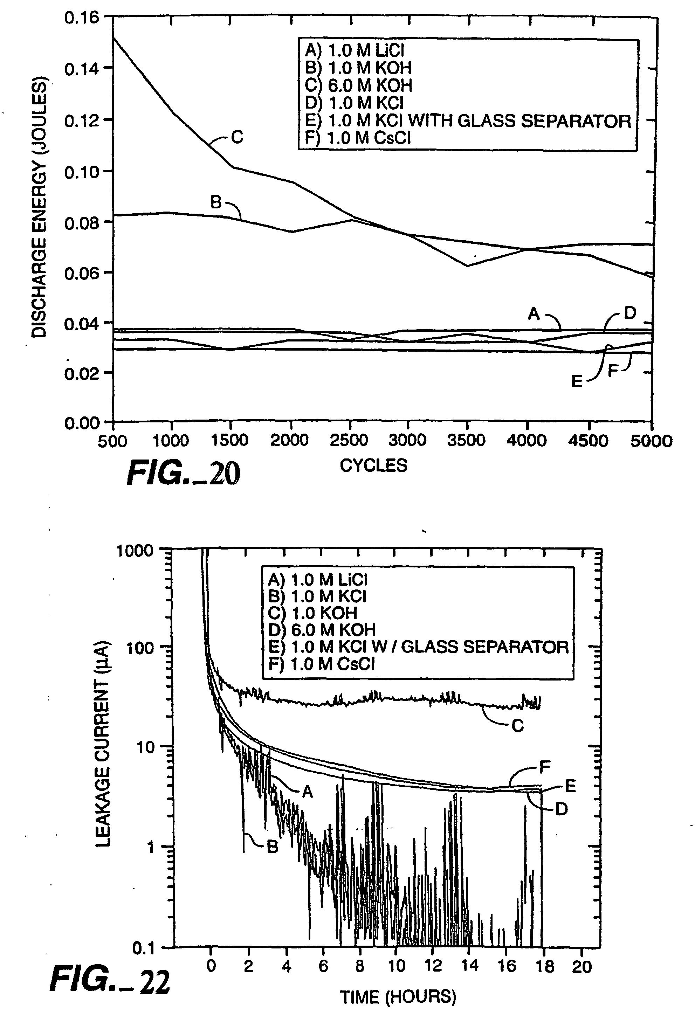

The SEM picture of a fresh sample titanium oxynitride (Figure 6A) and after 120 CV cycles (16 hours) in alkaline solution (Figure 20B) and acid solution (Figure 20C). The morphologies are the same of the fresh sample and the sample after 120 CV cycles in KOH. The sample after 120 CV cycles in 3.5M H₂SO₄ shows a totally different structure which is consistent with XRD results:
(a) Fresh sample (b) After CV cycles in KOH (c) After CV cycles in H₂SO₄.

After six charge/discharge cycles, the electrolytes are analyzed by inductively coupled plasma (ICP) spectrometry. The Ti-ion concentration in 6M KOH is 3 ppm, but in 3.5M H₂SO₄ it is 853 ppm. This huge difference in concentration indicates that TiNO film is much more stable in alkaline solution than in acid solution.

### Titanium Oxynitride Adhesion and Cohesion Test (Qualitative)

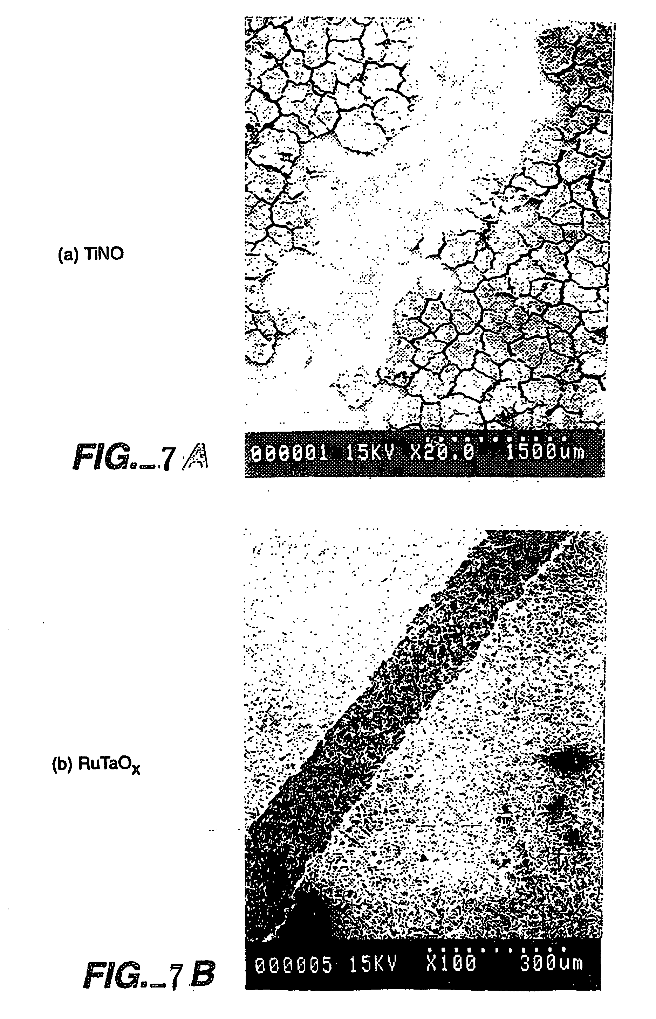

There are no standards to test the film adhesion and cohesion yet. The bend test is: simply hold the film, and bend the corner 180 degrees, then bend it back. The SEM is used to take magnified pictures (see Figures 7A and 7B). The width of cracks, and the straightness of the crack line can approximately represent the cohesion and the adhesion of the films. It is found that TiNO has cracks about five times wider than RuTaOₓ.

### Zirconium and Manganese as Cementation Materials

The samples of 15% to 65% Zr mixed TiNO are pyrolyzed at 200°C in 2 hrs. All samples show good adhesion. Specific surface area and the capacitance decrease as the Zr amount increases, which is interpreted that Zr is not an active material.

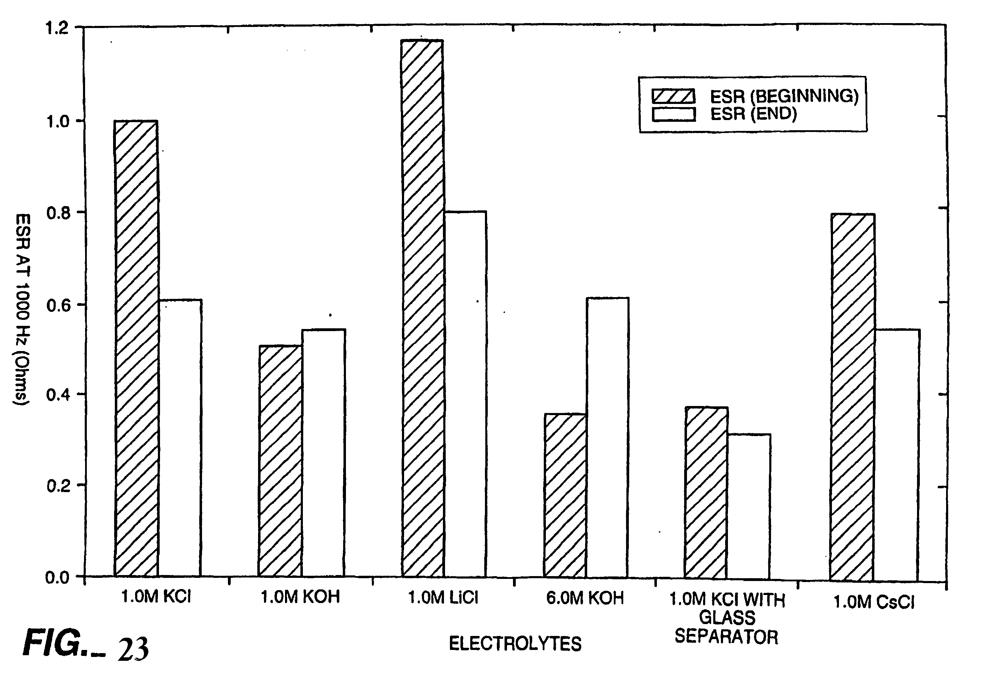

Using a 1.5M TiCl₄ solution, mixing with either 0.5, or 10% Mn are dip coated on Ti substrates. After pyrolysis and nitriding, the more Mn added, the poorer the cohesion is since the Mn changes the original morphology from SEM photographs (Figure 22). The BET specific surface area decreases from 55 to 16 m²/g when Mn amount increases rom 0 to 10%.

### Reliability of Nitriding Reaction Test

Eleven samples are nitrided under the same conditions. These samples were divided into two groups: TiNO and TiNO + 1 %Mn. Except for two runs which failed, all the tests have a similar capacitance as listed in Table 3, and all of them are completely nitrided in the reaction as shown by XRD patterns. Ignoring the two failed runs, the average capacitance of TiNO is 0.56 ±0.05 F/cm², which yields a specific capacitance of 46± 4 F/g. The average capacitance of TiNO + 1%Mn is 0.63 ±0.05 F/cm², which yields the specific capacitance of 47±4 F/g.

Both materials have relative errors of 8%, or deviation of 7%. These errors consist of three parts: manually dip coating of oxide sheets; different runs of nitride reaction; capacitance calculations from CV graphs. The capacitance from different oxide sheets varies comparing sheet A and B or A' and B' are found in Table 3.

**TABLE 3**

| Capacitance of TiNO and TiNO + 1 % Mn | | | | | |
|---|---|---|---|---|---|
| No | Sheet | Sample | Capacitance (F/cm²) | Surface Area (m²/g) | |
| 60819 | A | TiNO | 0.60 | 41 | |
| 60819 | B' | TiNO+1%Mn | 0.65 | 36 | |
| 60820 | B | TiNO | 0.46 | 35 | |
| 60821 | B' | TiNO+1%Mn | 0.27 | 35 | Fault |
| 60822 | B | TiNO | 0.55 | 38 | |
| 60823 | A' | TiNO+1%Mn | n/a | 37 | Fault |
| 60825 | B' | TiNO+1%.Mn | 0.64 | 36 | |
| 60826 | A | TINO | 0.55 | 37 | |
| 60827 | A | TiNO | 0.63 | 37 | |
| 60828 | A' | TiNO+1%Mn | 0.53 | 35 | |
| 60829 | B' | TiNO+1%Mn | 0.69 | 39 | |

### Addition of other metal oxides to enhance adhesion of titanium oxide

In the standard RuTaOx system, the addition of tantalum oxide acts as a dispersing agent which increases surface area, improving specific capacitance and smoothing out the surface of the coated sheets. But because of cost, TaCl₅ is not economical in the TiNO system and replacement materials such as MnCl₂ and ZrCl₄ were investigated.

incorporation of MnCl₂ and ZrCl₄ into the precursor solution improved the adhesion of the coating material and smoothed out the surface of the electrodes. A parametric study was performed on both additives to see which metal oxide improves adhesion more as well as retains or increases the specific surface area of TiO₂. The experiments entailed coating the electrodes using the standard coating process at 200°C for 2 hrs in air. With the addition of either metal oxide to the precursor solution at the optimum condition, the structure of the material remained amorphous.

The addition of 1 to 10% MnCl₂ to the 1 M TiCl₄/IPA solution improved the adhesion of the coating but lowered the surface area. (Se Figures 22A, 22B and 22C). The more MnCl₂ was added to the solution, the lower the surface area became. Therefore only a limited amount (<5%) of MnCl₂ was added to the system. The advantage of using MnCl₂ over ZrCl₄ is that all phases of MnO₂ are conductive unlike ZrO₂ where its presence can lower the capacitance of TiNO.

Different amounts of ZrCl₄ were added to the precursor solution of (1 M TiCl₄/IPA) to further improve adhesion. The amount of the additive varied from 15 to 65%. The adhesion was very good for up to 35%, but flaking was observed in the electrodes with the higher ZrCl₄ content. The surface of the electrodes was very smooth while the specific surface area increased with increasing ZrCl₄ content until a maximum was reached and then started to continuously decrease. After nitriding these electrodes, the resulting material was not very conductive therefore the amount of ZrCl₄ that should be added into the precursor solution should not be beyond 5%.

In the standard coating process described herein, there is no control over the environmental conditions. In a controlled pyrolysis reacor, more control over the conditions such as temperature, humidity and air flow rate is used.

When using the controlled pyrolysis reactor, several halide coated sheets are dried and annealed at the same time. Pre-heated dry air flows through the reactor allowing temperature uniformity and control. Humidity, oxygen content, airflow rate and temperature at the inlet and outlet of the reactor as well as in different locations in the reactor zone, are tracked. By controlling these variables, there is obtained better adhesion of the coating material to the substrate, and the surface of the electrodes is much smoother. When applying the standard coating process in high humidity environments, the surface of the coated sheets becomes uneven due to particle build-up. this build-up usually flakes off on contact, and the uneven surface causes problems for packaging.

The reactor was used to synthesize a TiO₂ film using the 1 M TiCl₄/IPA solution on a Ti substrate with 15 coats annealed at 200°C for 2 hours. In the reactor, the coating process is different than the standard process. The electrodes remain inside the reactor during both steps as compared to the standard process where the electrodes are removed from the drying oven to the annealing oven thus being exposed to the surrounding conditions. The coating process in the reactor consists of drying at 75°C for 10 min. ramping (increasing) the temperature up to 200°C, holding for 10 min. and then cooling to about 75°C.

The adhesion of the coating material is much better in the reactor than the standard coating process. But the specific surface area was lower (25 m²/g vs. 36 m²/g) due to the control over the processing conditions (i.e., coating process, temperature, humidity and air flow rate).

The addition of steam into the process improves the specific surface area of TiO₂. Using the 1 M TiCl₄/IPA on 5 mil Ti with 15 coats at 200°C for 2 hours, the reactor processing conditions were as follows: dip in the precursor halide solution, dry at 75°C for 10 minutes then ramp up to 200°C and add steam 1.27 m³ per minute (45 cubic feet per minute (CFM)), 1 to 30% relative humidity for 10 minutes (in between each coat only). After adding 15 coats of halide, the product is annealed at 200°C for 2 hours.

At 200 ° C, the maximum relative humidity attainable in the reactor was in the range of 1 to 1.6%. although this may not be considered a 'humid' environment, these conditions have shown a distinct difference in the specific surface area of the electrode. The specific surface areas of the TiO₂ electrode process in three different methods at the same conditions (1 M TiCl₄/IPA; 5 mil Ti; 15 coats; 200°C; 2 hour anneal) are:

| | |
|---|---|
| standard coating process | 36 m²/g |
| reactor w/out steam | 25 m²/g |
| reactor w/steam | 90 m²/g |

With the addition of steam, the specific surface area is almost three times higher than without steam although the loading is the same for all three conditions (about 8 mg/cm²). All results have been reproducible at different conditions. Nitriding Ramping Rate and Reaction Temperature.

Temperature programmed reaction is a slow increasing (ramping) rate in order to produce the maximum surface area. Different ramping rates are studied to optimize nitriding conditions. Capacitance data is listed in Table 4. When the temperature is increasing at less than the 3.5 hour from 25°C to 700°C, the slower rate gives better result. More than 3.5 hrs of ramping rate shows no extra advantage.

The nitriding reaction at 700°C yields an oxygen to nitrogen ratio of 1:1 in the TiNO sample. At 800°C, the nitriding reaction is more complete, with a N:O ratio of 4:1. The sample color is close to gold. The capacitance is 23 F/cm² (BET surface area 26 m²/g), about half the capacitance and half the surface area compared to nitriding at 700°C (0.54 F/cm², 59 m²/g).

**TABLE 4**

| The relation of ramping rate and capacitance | | | | | |
|---|---|---|---|---|---|
| Ramp Rate (hr) | 0 | 1.9 | 3.5 | 7.0 | 14.0 |
| Reaction Time (hrs) | 4 | 4 | 4 | 4 | 4 |
| Capacitance (F/cm²) | 0.32 | 0.42 | 0.54 | 0.50 | 0.55 |

### impedance Measurement and Leakage Current Test in a Single Test Tube Cell

The AC impedance measurement is carried out in a glass test tube. Two pieces of the same material are cut the same size (2 cm²). These two pieces are separated by a glass-paper separator which is dipped in the electrolyte. The AC impedance equivalent series resistance (ESR) is shown in Figure 23. At high frequency the TiNO film in alkaline medium has the same ESR as RuTaOₓ film in acid. Both of them are about 0.4Ω in single test tubes.

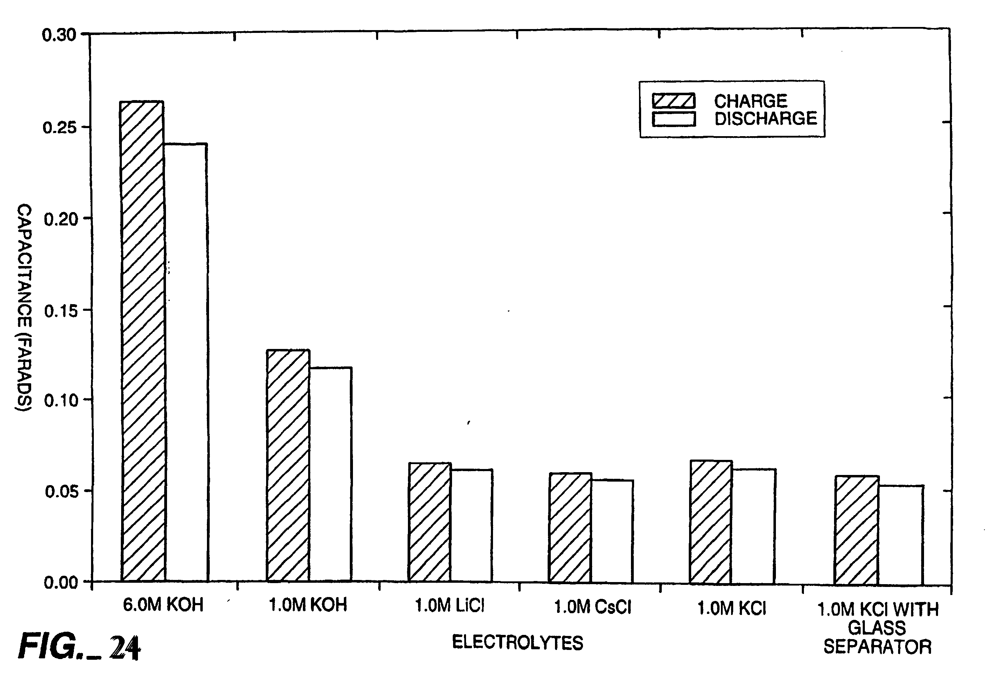

The leakage current test is carried out that two pieces of TiNO which are cut to about 4 cm² and set separately in a test tube. This material is safe to charge up to 1.2V. After the charge to 1 V in 1 M KOH, the leakage current data are shown in Figure 24. At least 4 hours is needed to achieve the so called "leakage current". The ESR is the same value (1.3Ω) before and after test. The leakage current in sulfuric acid is three times higher than in potassium hydroxide. The leakage current tet of different charge voltages are listed in Table 5.

**TABLE 5**

| Leakage current test in 1 M KOH | | |
|---|---|---|
| Voltage (V) | Electrode Capacitance (F/cm²) | Leakage Current at 30 min. (µA/cm²) |
| 0.5 | 0.36 | 25 |
| 0.7 | 0.45 | 39 |
| 0.9 | 0.53 | 69 |
| 1.0 | 0.64 | 89 |
| 1.1 | 0.73 | 115 |
| 1.2 | 0.84 | 134 |

### Packaged Titanium Oxynitride Ultracapacitor and After Test Analysis

The first five-cell stack of titanium oxynitride ultracapacitors were packaged in 12.9 cm² size with 1 M KOH electrolyte. After charging to 5V using 99 mA charge/discharge current, the output energy and power are 0.8J and 0.2W respectively.

This TiNO material for packaging purposes has a CV capacitance of 0.5 F/cm². After EDM cut the material it is washed in 1 M KOH and DI water, and has a capacitance of only 0.3 F/cm². SEM pictures show some "holes" and "dusts" on the surface (Figures, 25A, 25B and 25C). The charge capacitance of ultracapacitor to 1 V is 0.2 F/cm² per electrode.

The first TiNO five-cell ultracapacitors last several hundred cycles. The ESR starts at 200 MΩ, then increases to several kΩ.

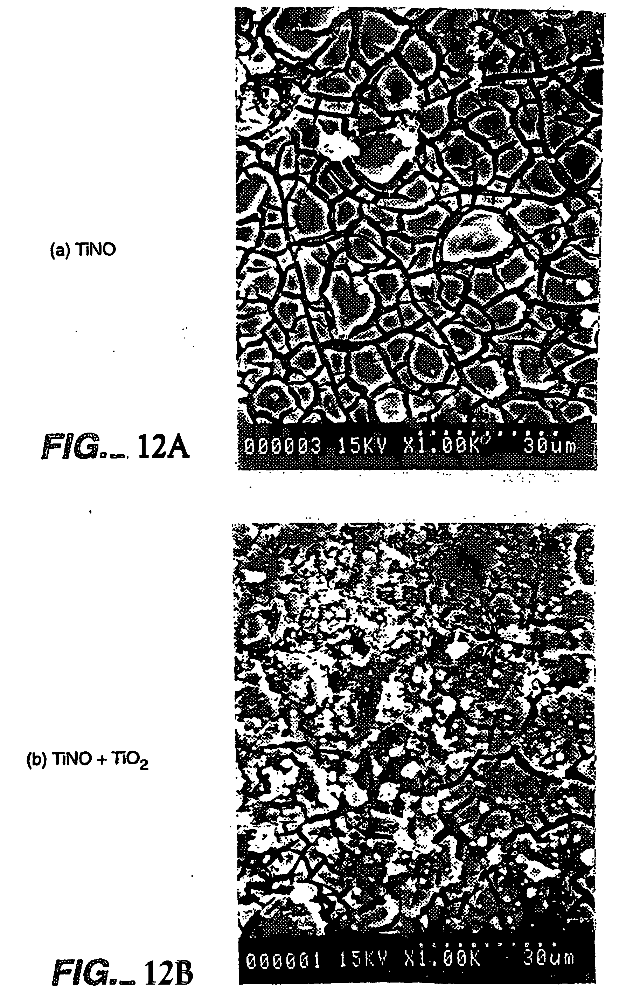

The XRD shows oxide patterns on some sides of electrode sheets. The BET specific surface area of electrodes are: original 43 m²/g, both sides TiNO 46 m²/g, and one side TiO₂ one side, TiNO 31 m²/g. The SEM pictures clearly show that when TiO₂ ball cluster involved, the TiNO structure disappeared. (Figure 12A and 12B). The hypothesis is that there must be a electrochemical reaction happening during charge and discharge of the device. What causes this to happen appears to be a short in between some sheets. Then. there is an over charge in between the sheets. ${\text{TiNO + 2H}}_{\text{2}} {\text{O + e}}^{\text{-}} {\text{→ TiO}}_{\text{2}} {\text{+ NH}}_{\text{3}} {\text{+ OH}}^{\text{-}}$

The second packaging material for 12.9 cm² has a 1.0 F/cm² capacitance from the CV test. After over 3000 cycles with charge and discharge current at 99 mA, the charge efficiency is kept over 90%.

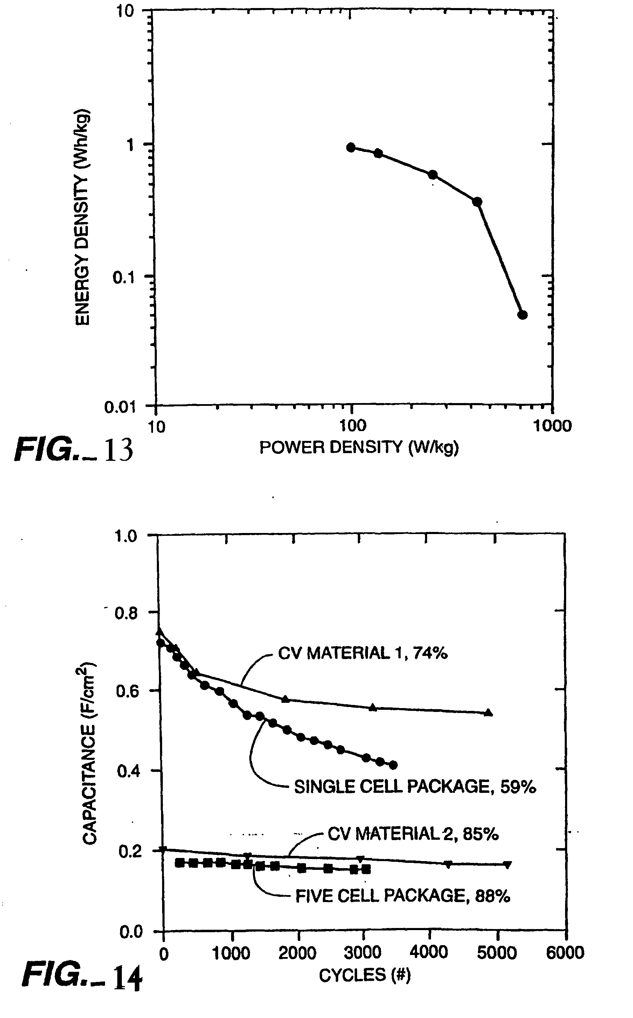

Ragone plots of single cell device is shown in Figure 13. The charge current is vary from 99 mA to 800 mA which corresponds to the discharge time vary from 35 to 0.3 seconds. The energy density and power density are calculated using active material weight only.

As has been stated elsewhere in this application, the use of strong aqueous acid or strong aqueous base in conjunction with the metal oxynitrides may not have long term stability in the presence of these aqueous electrolytes.

In preferred examples substantially neutral salt aqueous electrolytes are used. Thus those electrolytes having a pH value of between about 6 and 8, preferably between about 6.5 and 7.5, more preferably between about 6.8 and 7.2 and especially about 7 are used.

The salts used to produce the substantially neutral aqueous electrolyte are selected from the alkali metal halides. Preferred salts include the potassium and sodium chlorides and bromides, and a more preferred salt is potassium chloride.

The concentration of the salts is usually between about 0.5 and 4.0M, preferably between about 1.0 and 4.0M, more preferably between about 2.0 and 3.5M, and especially between about 3.0 and 3.5M.

As is described in the Examples the metal oxynitride - containing electrodes are very useful in the presence of these substantially neutral electrolytes. The corrosion and degradation of the cell under operational conditions is greatly reduced or eliminated. In fact, the TiNO electrode with 1 M KCI is still functioning well after being charged and discharged more than 5,000 cycles at between 0 and 1.6 volt per cell. This is the highest voltage yet reproducibly observed for this type of cell.

Most surprising is the fact that the TiNO electrode with a 1 M KCI electrolyte is successfully charged and discharged at 1.6V. The maximum that a double layer cell for long term use can be charged is usually about 1.1V.

The metal oxynitride has a high surface area which facilitate the storage of electrical energy. The coating oxynitride) is porous and composed of mosly micropores (diameter <17Å (1Å = 100pm)). Large 0.1-1µm wide cracks are present on the surface protruding to depths as thick as the coating. However, greater than 99% of the surface area arises from these micropores. The average diameter of these micropores are around 6-12 Å. In addition the micropores, a narrow distribution of mesopores (diameter < 17-1000Å) having a diameter of about 35 Å is created. These treated electrode coatings have 85-95% of the surface area arising from the micropore structure. Pore size distribution can be varied. The effective high surface area of the coating is 1,000 to 10,000 to 100,000 times larger than the projected surface area of the electrode as a monolith.

### Titanium Oxynitride Material Stability Test

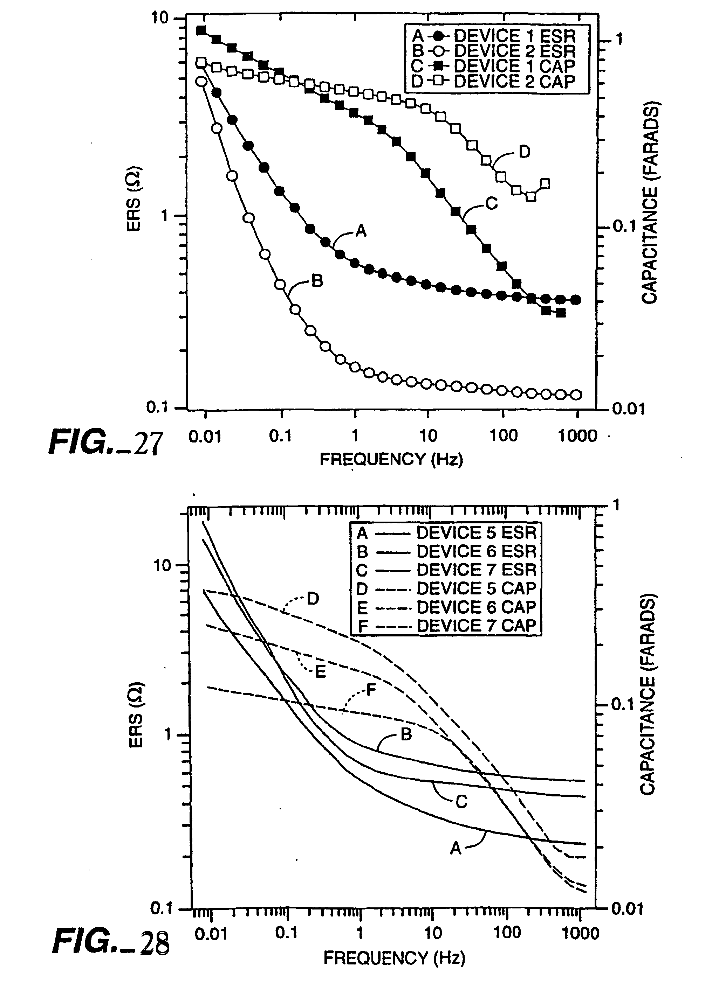

Two TiNO materials have been used for packing ultra capacitor devices. One has capacitance of 0.8 F/cm² while the other has 0.2 F/cm². From Figure 28, it is clear that all device capacitance from charge/discharge test and material capacitance from CV test decayed during the cycles. Device tests showed decay faster than material CV tests because they are the closed system. Even small amount of gas evolution may damage the whole device. The data listed on the Figure 28 is the capacitance at 3000 cycles versus to the first few cycles.

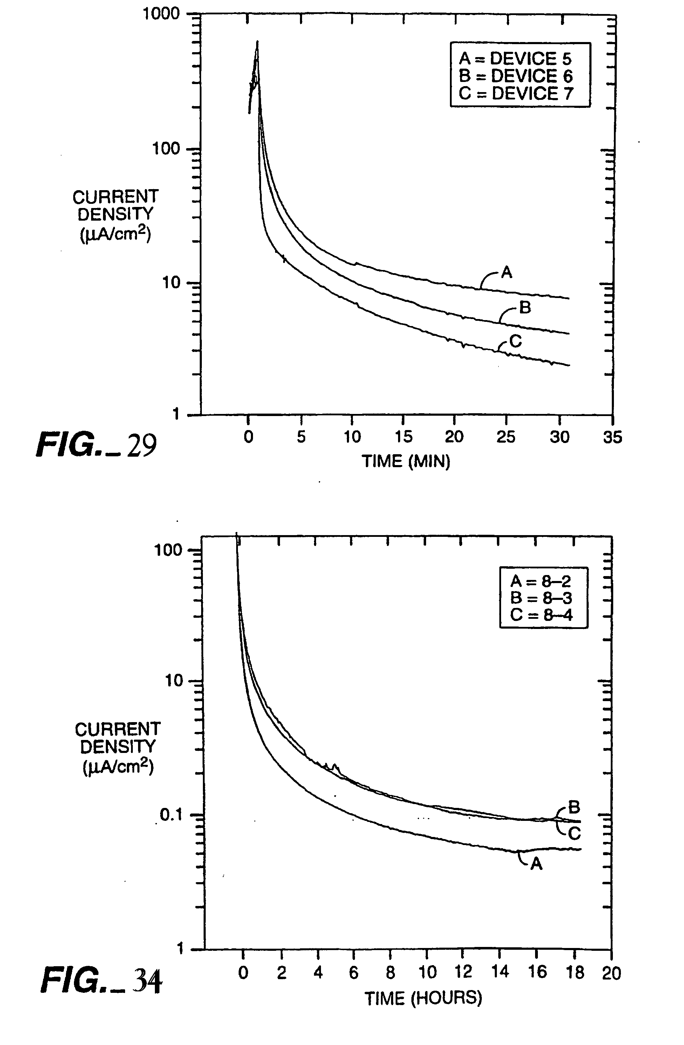

TiNO material decays much faster than RuTaOₓ material. One possible explanation is that TiNO not only has small layered cracks, but also has large deep cracks through down to the substrate (Figures 29A and 29B). Thus, the substrate corrosion become a serious problem.

The titanium oxynitride produced has a surface area of about 10 to 60 m²/g, preferably about 20 to 56 m²/g.
Summary -- Titanium oxynitride (TiNO) is an ultracapacitor energy storage material. The active material cost is presently about 62 cents per kilo-Joule. The performance of TiNO as an ultracapacitor material data is described. The more coats of oxide-oxynitride, the thicker the film the higher surface area and the higher the capacitance. But, the more coats, the poorer the cohesion. The adhesion and cohesion properties are improved when Zr is mixed in TiNO, but Zr is not an active material.

Commercial applications of these metal nitride or metal oxynitride electrodes are found in U.S. Patent 5,464,453.

The following examples are presented to be descriptive and explanatory only. They are not to be construed to be limiting in any manner.

### General:

Molybdenum chloride is obtained from Alfa Aesar and is used without further purification.

Titanium chloride is also obtained from Alfa Aesar and is used without further purification.

iron chloride (FeCl₃) or (FeCl₂) are also obtained from Alfa Aesar and are essentially free of water.

### EXAMPLE 1

### Molybdenum Oxynitride

(a) Mo₂NO - Molybdenum chloride is dip coated onto a Ti sheet, which was pre-etched in hot HCl as described in U.S. Patent 5,464,453. The 1 M molybdenum (penta) chloride in isopropanol film is first converted to molybdenum oxide in an oven by pyrolysis at temperatures between about 150-400° C for between about 5 and 60 minutes. The dip coating and oxidation and removal of isopropanol is repeated for 15 times. The oxide is then heated for 3 hours at 200°C to convert the 95% or greater of the chloride to the oxide. The oxide is then converted to the oxynitride via flowing NH₃ gas (13 I/min) over the oxide sheets at a temperature of about 700° C. This molybdenum oxynitride material is characterized by XRD, SEM, EDAX and AES. The ultracapacitor performance of Mo₂NO material is evaluated by cyclic voltammetry (CV), package cell charge-discharge cycles and leakage current measurement using KOH and H₂SO₄.
(b) Similarly, when Example 1(a) is repeated except that the molybdenum chloride is replaced with a stoichiometrically equivalent amount of niobium chloride a corresponding amount of niobium oxynitride is obtained.
(c) Similarly, when Example 1(a) is repeated except that the molybdenum chloride is replaced with a stoichiometrically equivalent amount of vanadium chloride a corresponding amount of vanadium oxynitride is obtained.
(d) Similarly, when Example 1(a) is repeated except that the molybdenum chloride is replaced with a stoichiometrically equivalent amount of tantalum chloride a corresponding amount of tantalum oxynitride is obtained.
(e) Similarly, when Example 1(a) is repeated except that the molybdenum chloride is replaced with a stoichiometrically equivalent amount of titanium chloride a corresponding amount of titanium oxynitride is obtained.
(f) Similarly, when Example 1(a) is repeated except that the molybdenum chloride is replaced with a stoichiometrically equivalent amount of zirconium chloride a corresponding amount of zirconium oxynitride is obtained.

### EXAMPLE 2

### Titanium Oxynitride

(a) Titanium chloride (1 M) in isopropanol is prepared. A titanium foil (flat sheet) substrate is dipped into the titanium chloride solution and coated. This coated foil is placed in an oven in air at 200°C for 10 min to convert the chloride to the oxide. The titanium chloride coated foil is removed from the oven and cooled to 20°C. This coating and heating is repeated 15 times until the desired level of coating is on the foil. The film is then post heated for 2 hr at 200°C to convert 95% or greater of the chloride to the oxide. The titanium oxide is then contacted with flowing ammonia 110-20 I/min) at 700°C for 4 hr. The titanium oxynitride film adheres well to the titanium sheet. The article is ready to be tested with electrolyte and/or used as an electrode in a double layer capacitor as described in U.S. Patent 5,464,453.
(b) Similarly, when Example 2(a) is repeated except that the titanium tetrachloride is replaced with a stoichiometrically equivalent amount of niobium chloride a corresponding amount of niobium oxynitride is obtained.
(c) Similarly, when Example 2(a) is repeated except that the titanium tetrachloride is replaced with a stoichiometrically equivalent amount of molybdenum chloride a corresponding amount of molybdenum oxynitride is obtained.
(d) Similarly, when Example 2(a) is repeated except that the titanium tetrachloride is replaced with a stoichiometrically equivalent amount of vanadium chloride a corresponding amount of vanadium oxynitride is obtained.
(e) Similarly, when Example 2(a) is repeated except that the titanium tetrachloride is replaced with a stoichiometrically equivalent amount of tantalum chloride a corresponding amount of tantalum oxynitride is obtained.
(f) Similarly, when Example 2(a) is repeated except that the titanium tetrachloride is replaced with a stoichiometrically equivalent amount of zirconium chloride a corresponding amount of zirconium oxynitride is obtained.
(g) Example 2(a) is repeated except that hydrogen gas (1-5 I/min) is combined with the ammonia at 700°C for 4 hrs. The resulting metal oxynitride has similar properties.

### EXAMPLE 3

### Use of Neutral Electrolyte, LiCl

### (CV Capacitance 0.39 F/cm², 50 F/g)

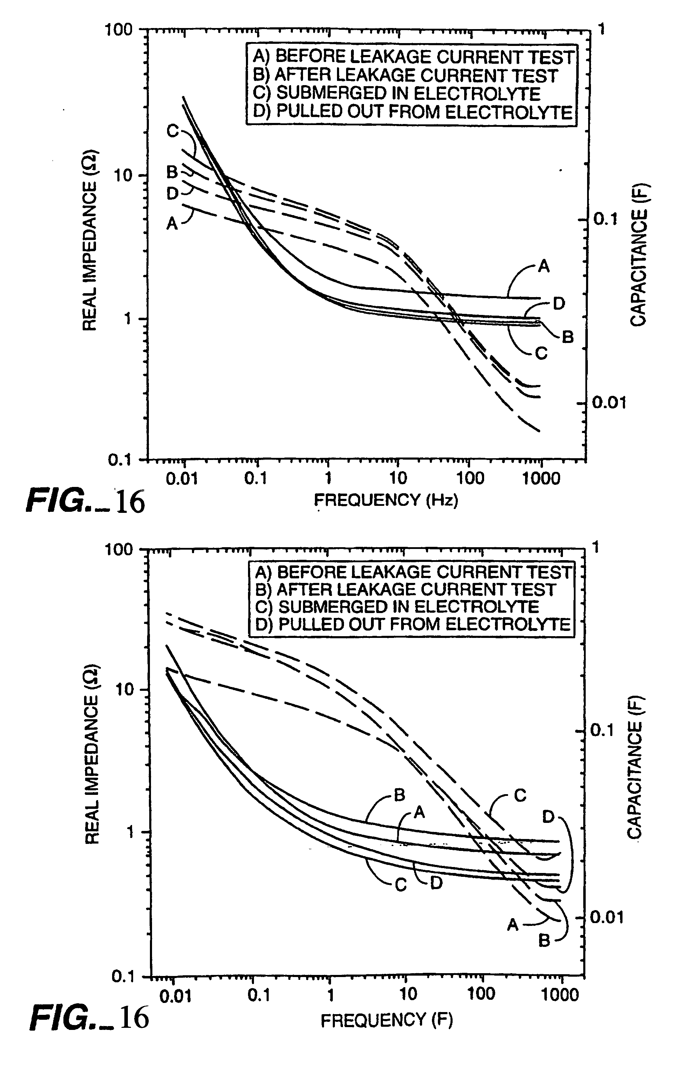

Two test tube single cells are tested to compare the performance of neutral electrolyte versus alkaline electrolyte. The titanium oxynitride layers are produced as described in Example 2 to a thickness of 0.05 mm. All electrodes are cut to 2 cm² size. Comparing Figure 16 to Figure 17 TiNO in liCI neutral electrolyte has less capacitance and higher resistance than in KOH alkaline electrolyte. There is not much difference using different test methods as shown in Figures 16 and 17. Figure 18 shows the TiNO in LiCI electrolyte has less leakage current than in KOH electrolyte.

After 10 cycles charging to IV, the capacitance, energy and efficiency date are as shown in Table 6. These values are consistent with the AC impedance data.

**Table 6**

| Electrolyte | LiCl | KOH |
|---|---|---|
| Cq in (F) | 0.15 | 0.43 |
| Cq out (F) | 0.13 | 0.37 |
| Efficiency q (%) | 84 | 86 |
| Ce in (F) | 0.17 | 0.49 |
| Ce out (F) | 0.11 | 0.29 |
| Efficiency e (%) | 67 | 59 |

### EXAMPLE 4

### Comparison of Hydroxide and Chloride Electrolytes

### (CV Capacitance 0.25 F/cm², 39 F/g)

Six test tube single cells are tested to compare electrode performance in different electrolytes. The TiON layers are produced according to Example 2 to a thickness of 0.05 mm. All electrodes are cut to 2 cm² size. Figure 4 shows that TiNO ultracapacitor is very stable through 5000 charge/discharge cycles in neutral electrolytes (aqueous salt solution), because the capacitance deteriorates in alkaline electrolyte. The higher the concentration of alkaline electrolyte, the faster the deterioration of the capacitance occurs due to corrosion.

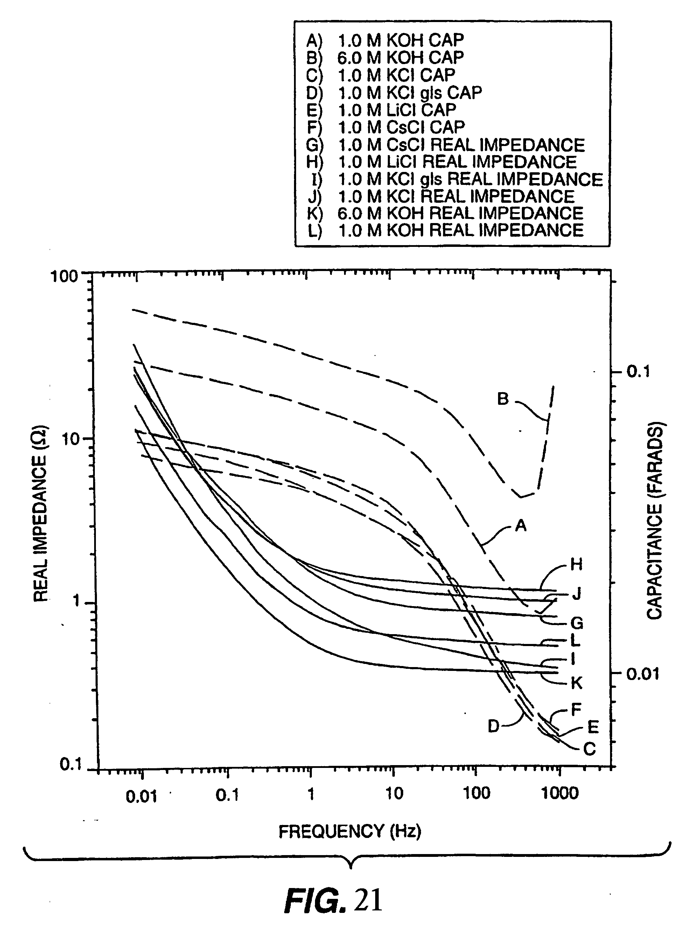

The capacitance and energies in neutral electrolytes are lower compared to the alkaline electrolytes as shown in Figures 19 and 20. The AC impedance data show the same situation in Figure 21. Leakage current was tested using different equipment, these data in Figure 22 can be used as reference, but are not reliable as a comparison.

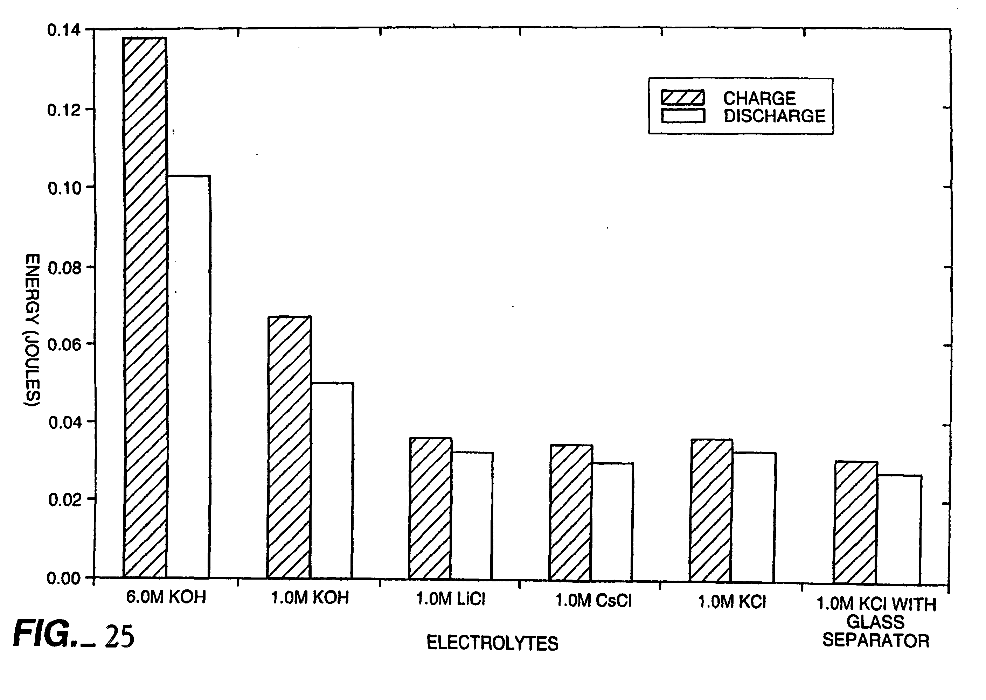

ESR data are shown in Figure 25. The ESR of neutral electrolytes are higher when compared to alkaline electrolytes. In neutral electrolytes, the ESR decreased after a series test. This series includes: AC impedance test, a 18 hours leakage current test, and a 5000 charge/discharge cycle test. In 1 M KOH the ESR increases a little while in 6M KOH increases greatly after the tests. The TiNO in neutral electrolytes have a much longer life time.

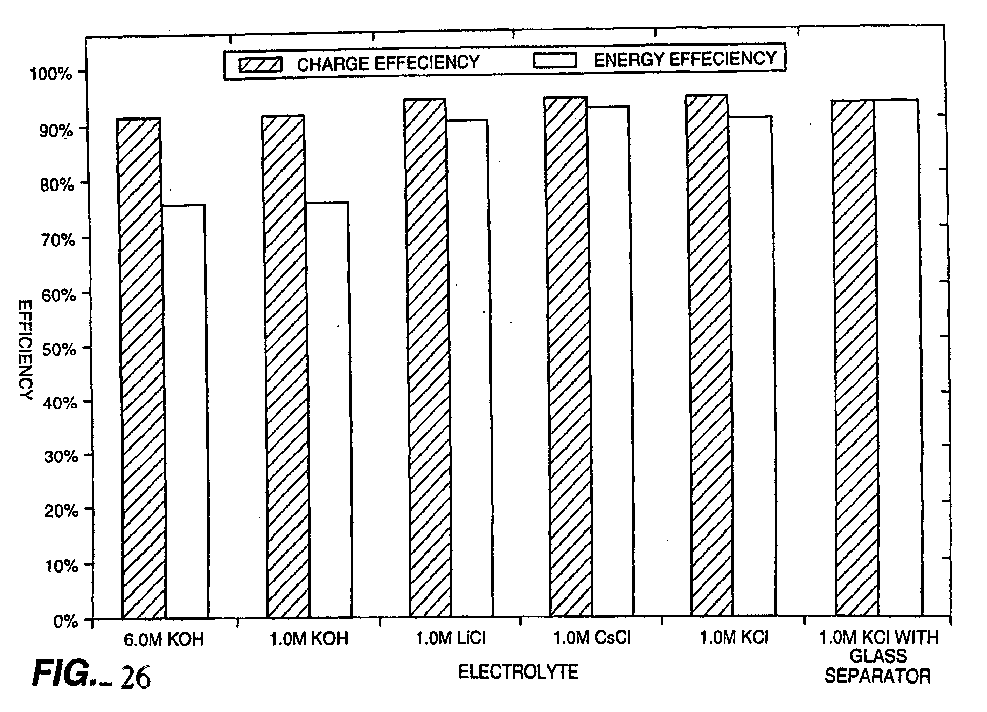

Figures 24 and 25 compare the first ten charge/discharge cycles of capacitance and energy in different electrolytes cells. The efficiency of cells having neutral electrolytes is higher than in cells having alkaline electrolytes. Especially, the energy efficiency reveal a big difference in Figure 26.

High surface area, low cost material such as TiNO is very helpful as an ultracapacitor electrode material. Several TiNO devices (size 12.9 cm²) have been produced and investigated for their ultracapacitor performance. The TiNO electrode material in neutral electrolytes is very stable and is charged successful up to 1.6V per cell. Thus, the energy density of TiNO ultracapacitor is comparable to the energy density of an RuTaOₓ ultracapacitor.

### EXAMPLE 5

### TiNO Electrodes

Two devices of TiNO electrodes (No. 1,2) are fabricated according to Example 2 as single cell devices. Cellulose sheets are used as separators which have 4.7 mil thickness, while glass paper has only a 2.3 thickness. Devices 1 and 2 are filled with 1 M KOH and 1 M KCI electrolytes, respectively. Fig. 26 shows their AC impedance frequency response data. Device No. 1 doesn't show electrical performance. After a leakage current test, the ESR increases to 32 ohms. In Device No. 2 discharge capacitance and energy are 0.6F and 0.2J, respectively. The coulomb efficiency, energy efficiency, ESR, output capacitance and energy are kept constant through 10,000 cycles. The initial and final ESR are 93 and 98 mohm. Device No. 4 is a single cell device using 6M KOH as electrolyte. The ESR is 180 mohm. Unfortunately, this device can not be charged to 0.5V.

### EXAMPLE 6

### TiNO Electrodes With Hydroxide and Chloride Electrolytes

Devices 5, 6, 7 having 6M KOH, 1 M KOH, 1 M KCl as electrolytes, respectively are fabricated. Their capacitance from charge/discharge cycle tests are 0.34.0.20,0.10 Farad per centimeter squared per electrode, respectively. Their AC impedance curves are shown in Fig. 27. Device 5 has the highest capacitance and lowest ESR, but has the shortest cycle life. Device 7 has the lowest capacitance, but the longest cycle life. Leakage current curves in Fig. 28 reveal that the lower the capacitance, the lower the leakage current is observed as expected.

Devices 5 and 6 survived less than 1000 charge/discharge cycles. The capacitance of these devices drops as the ESR increases.

Device 7 passed more than 10,000 charge/discharge cycles without any degradation after charging to 4.5 V as listed in Table 7.

**Table 7**

| Device 7 Charge/Discharge Data | | | | | | |
|---|---|---|---|---|---|---|
| Cycles (No.) | Charge Q (mAHr) | Discharge Q (mAHr) | Charge E (mWHr) | Discharge E (mWHr) | Charge t (see) | Discharge t (sec) |
| 100 | 0.164 | 0.151 | 0.393 | 0.317 | 4.58 | 4.22 |
| 200 | 0.162 | 0.150 | 0.389 | 0.313 | 4.53 | 4.18 |
| 300 | 0.163 | 0.150 | 0.390 | 0.314 | 4.55 | 4.19 |
| 400 | 0.164 | 0.151 | 0.392 | 0.315 | 4.57 | 4.21 |
| 500 | 0.166 | 0.153 | 0.398 | 0.318 | 4.63 | 4.25 |
| 600 | 0.164 | 0.152 | 0.394 | 0.316 | 4.59 | 4.23 |
| 700 | 0.166 | 0.152 | 0.397 | 0.317 | 4.62 | 4.25 |
| 800 | 0.166 | 0.153 | 0.398 | 0.319 | 4.64 | 4.27 |
| 900 | 0.171 | 0.157 | 0.410 | 0.327 | 4.77 | 4.38 |
| 1000 | 0.171 | 0.157 | 0.411 | 0.327 | 4.77 | 4.38 |

From the CV curve shown in Fig. 28 the TiNO electrode material exhibits more than a 1.0 V voltage window. It can be charged close to 0.20 V.

Device 7 was used to test the maximum device voltage window. These data are listed in Table 8. As a comparison, a RuTaOₓ capacitor device having very good data is also included.

**Table 8**

| Device 7 Maximum Voltage | | | | | | |
|---|---|---|---|---|---|---|
| Electrode | TiNO | TiNO | TiNO | TiNO | TiNO | RuTaOx |
| Electrolyte | 1M KCI | 1M KCI | 1M KCl | 1M KCl | 1M KCl | 4.6M H₂SO₄ |
| Device | 5 cell | 5 cell | 5 cell | 5 cell | 5 cell | 10 cell |
| Size (cm²) | 12.9 | 12.9 | 12.9 | 12.9 | 12.9 | 12.9 |
| Charge V (V) | 5 | 6 | 7 | 8 | 9 | 9 |
| Charge Q (mAHr) | 0.19 | 0.26 | 0.31 | 0.39 | 0.46 | 1.60 |
| Discharge Q (mAHr) | 0.18 | 0.24 | 0.29 | 0.36 | 0.42 | 1.55* |
| Efficiency q (%) | 92.6 | 91.7 | 91.9 | 91.9 | 90.5 | 96.9* |
| Discharge C (F/cm²) | 0.100 | 0.112 | 0.116 | 0.126 | 0.130 | 0.961* |
| Charge E (mWHr) | 0.52 | 0.83 | 1.2 | 1.7 | 2.2 | 7.5 |
| Discharge E (mWHr) | 0.42 | 0.65 | 0.91 | 1.3 | 1.6 | 6.2* |
| Discharge E (J) | 1.5 | 2.3 | 3.3 | 4.7 | 5.8 | 22.3* |
| Efficiency e (%) | 80.6 | 77.9 | 77.5 | 76.2 | 71.5 | 82.9* |
| Discharge t (sec) | 5.0 | 6.7 | 8.1 | 10.1 | 11.7 | 48 |
| Discharge P (W) | 0.30 | 0.34 | 0.41 | 0.47 | 0.50 | 0.46* |
| C after 1000 cycles | stable | Stable | stable | stable | Decrease | stable |
| ESR after 1000 cycles (mΩ) | 389 | 383 | 383 | 363 | 400 | 35 |

| | | | | | | |
|---|---|---|---|---|---|---|
| * estimated data | | | | | | |

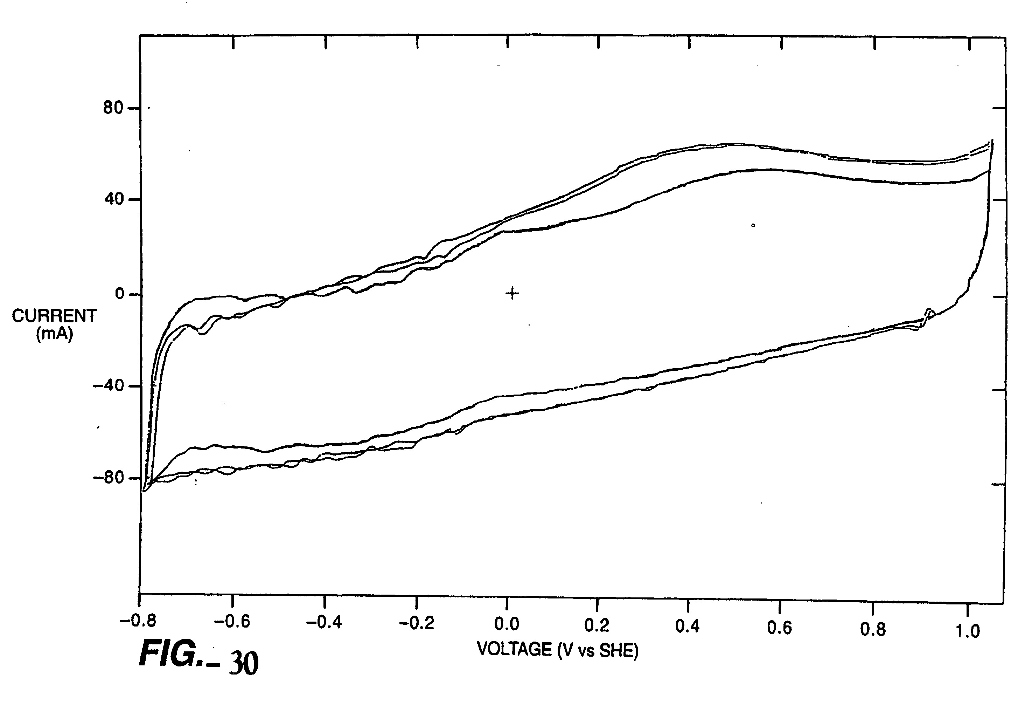

Figures 29 and 30 are the respective charge and energy curves of 1000 charge/discharge cycles for Device 7 from 5.0V to 9.0V (from 1.0V per cell to 1.8V per cell). Evaluating these curves and Table 8 the TiNO device using 1.OM KCl as electrolyte can be safely charged to 1.6V per cell.

### EXAMPLE 7

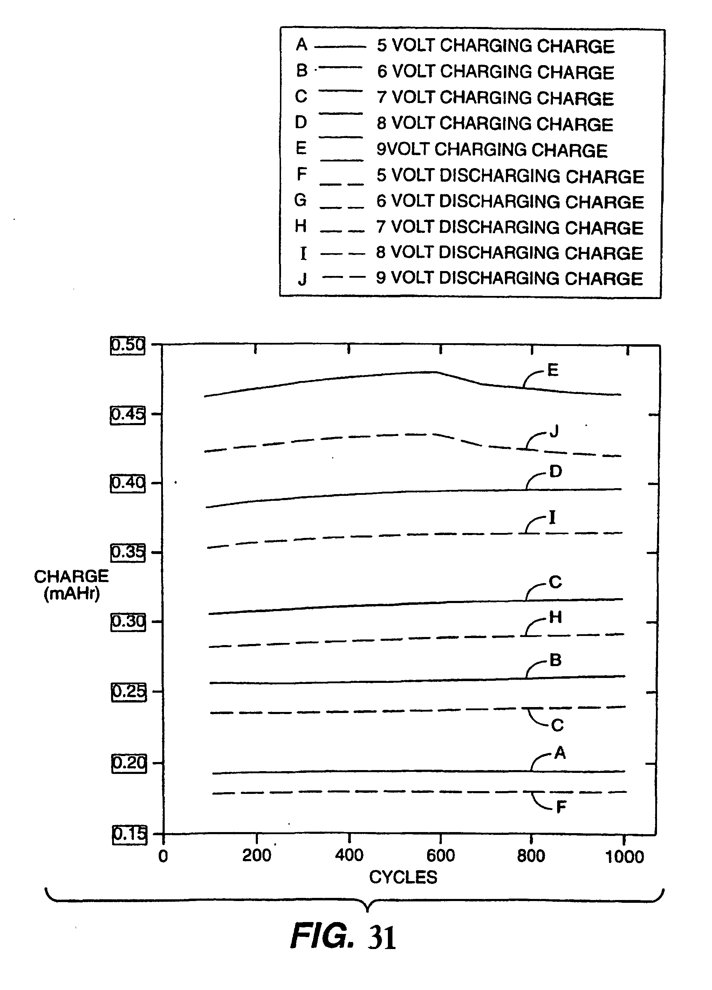

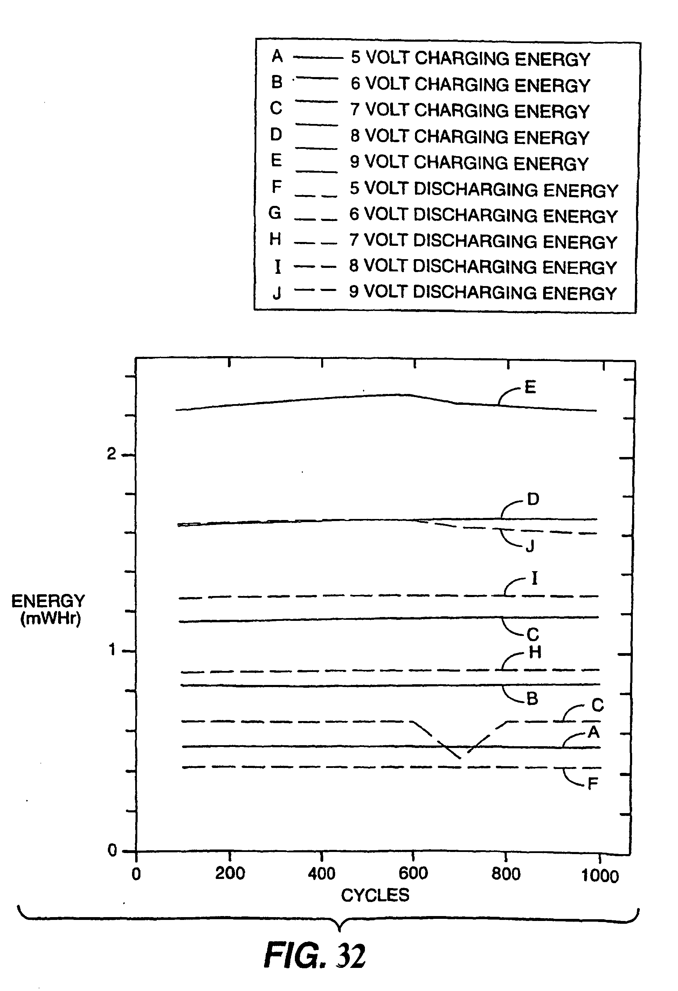

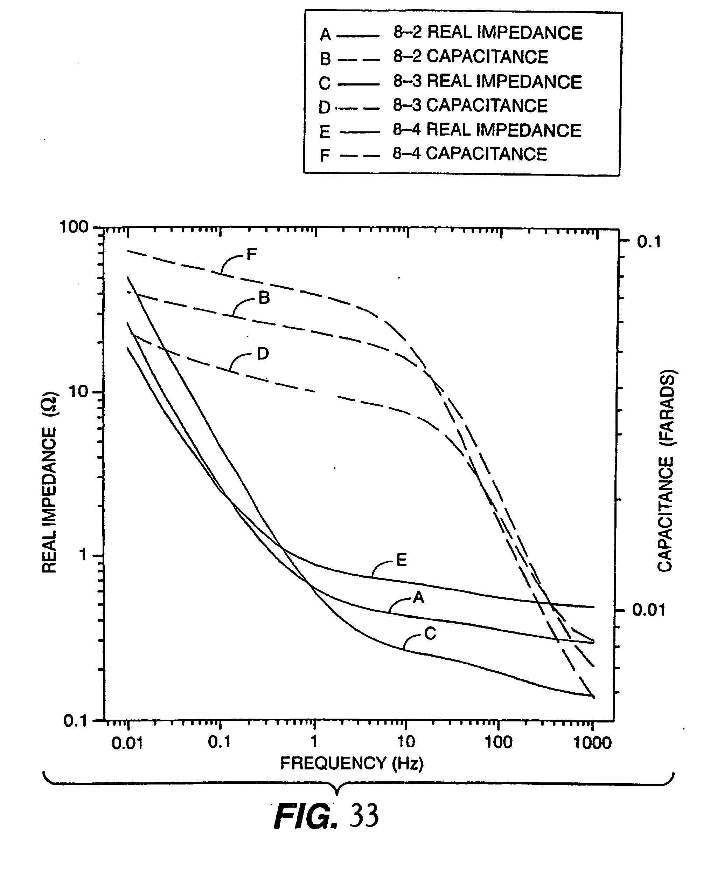

Five Cell -- Data for three 5-cell TiNO packaged devices are shown in Table 9. Figure 31 shows the AC impedance data for these three devices. Fig. 32 reveals 18 hour leakage current data. Fig. 33 is the discharge energy and capacitance of these three devices for 5000 cycles at 5V. All devices using neutral electrolytes are very stable during the cycles. Of these, Device 8-4 shows the best electrical performance at low frequency.

**Table 9**

| Device | Device 8-2 | Device 8-3 | Device 8-4 |
|---|---|---|---|
| Electrode | 1M KCI | 1M KCI | 1M LiCl |
| Separator | Cellulose | Glass paper | cellulose |
| ESR | 302 mΩ | 142 mΩ | 487 mΩ |
| Ω = ohm | | | |

These three devices have been charged and discharged more than 1 V per cell for 5000 cycles on each voltage. Both coulomb and energy efficiencies are good. Among them, Device 8-4 shows the best performance. The capacitance data units are Farads per square centimeter per electrode. Additional properties are shown in Tables 10, 11 and 12.

**Table 10**

| Device No. 8-2 Discharge Data at 5000 Cycles | | | | | | | |
|---|---|---|---|---|---|---|---|
| Voltage (V) | V per cell (V) | Capacity (mAHr) | Capacitance (F/cm²) | Efficiency q (%) | Energy (mWHr) | Energy (J) | Efficiency e (%) |
| 5.0 | 1.0 | 0.10 | 0.056 | 94 | 0.23 | 0.83 | 85 |
| 6.0 | 1.2 | 0.13 | 0.060 | 92 | 0.37 | 1.3 | 80 |
| 7.0 | 1.4 | 0.16 | 0.064 | 91 | 0.53 | 1.9 | 77 |
| 8.0 | 1.6 | 0.20 | 0.070 | 90 | 0.71 | 2.6 | 73 |

**Table 11**

| Device No. 8-3 Discharge Data at 5000 Cycles | | | | | | | |
|---|---|---|---|---|---|---|---|
| Voltage (V) | V per cell (V) | Capacity (mAHr) | Capacitance (F/cm²) | Efficiency q (%) | Energy (mWHr) | Energy (J) | Efficiency e (%) |
| 5.0 | 1.0 | 0.066 | 0.037 | 92 | 0.16 | 0.58 | 84 |
| 6.0 | 1.2 | 0.089 | 0.041 | 90 | 0.25 | 0.90 | 78 |
| 7.0 | 1.4 | 0.11 | 0.044 | 89 | 0.36 | 1.3 | 75 |
| 8.0 | 1.6 | 0.13 | 0.045 | 88 | 0.47 | 1.7 | 73 |

**Table 12**

| Device No. 8-4 Discharge Data at 5000 Cycles | | | | | | | |
|---|---|---|---|---|---|---|---|
| Voltage (V) | V per cell (V) | Capacity (mAHr) | Capacitance (F/cm²) | Efficiency q (%) | Energy (mWHr) | Energy (J) | Efficiency e (%) |
| 5.0 | 1.0 | 0.13 | 0.073 | 94. | 0.29 | 1.0 | 82 |
| 6.0 | 1.2 | 0.16 | 0.074 | 93 | 0.44 | 1.6 | 78 |
| 7.0 | 1.4 | 0.20 | 0.080 | 92 | 0.61 | 2.2 | 75 |
| 8.0 | 1.6 | 0.23 | 0.080 | 91 | 0.79 | 2.8 | 72 |

### EXAMPLE 8

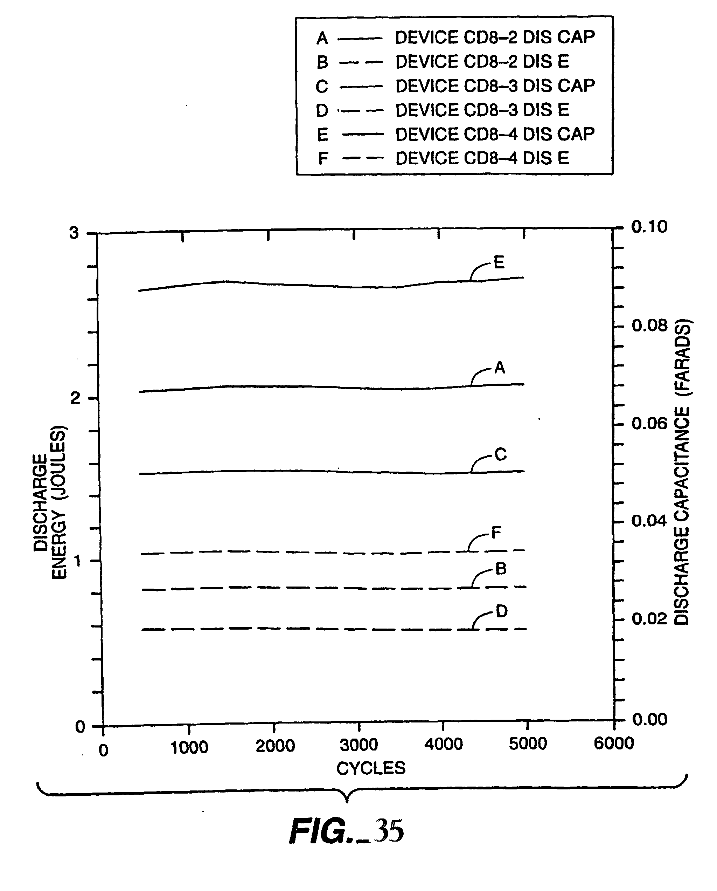

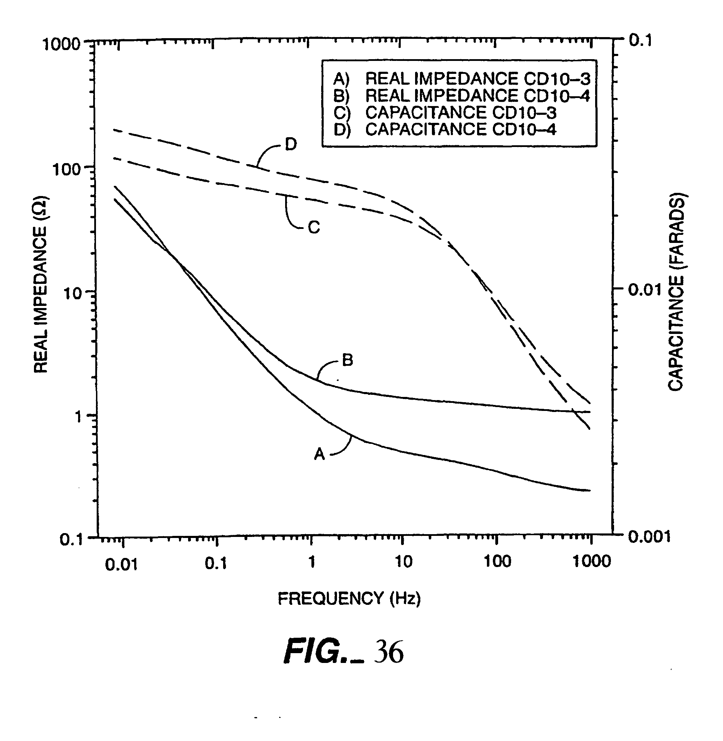

Storage devices No. 10-3 and 10-4 use 1M LiCl as electrolyte, have a single gasket and a double gasket respectively. AC impedance curves are shown in Fig. 36. These two devices ESR are 0.27 and 1.08 Ω respectively due to the different gaskets. The double gasket device has a higher performance also its ESR is higher too. The 60 min leakage current curves are shown in Fig. 35.

The Maccor test equipment can only charge to maximum of 10 V. It is impossible to charge these devices to more than 1V per cell. Single channel test equipment is used to perform charge and discharge device cycle test. The efficiencies are not very accurate, but can be used as a reference. The testing data is listed in Tables 13 and 14. After cycle testing at 17V, the ESR of device 10-3 and 10-4 increase to 0.39 and 1.44 Ω. This also provides the evidence that the capacitor can not be charged more than 1.6V per cell in neutral electrolytes.

**. Table 13**

| Device No. 10-3 Discharge Data at 1000 Cycles | | | | | | |
|---|---|---|---|---|---|---|
| Voltage (V) | V per cell (V) | Capacity (F) | Capacitance (F/cm²) | Efficiency g (%) | Energy (J) | Efficiency E (%) |
| 10.0 | 1.0 | 0.0273 | 0.042 | 99 | 1.15 | 82 |
| 11.0 | 1.1 | 0.0284 | 0.044 | 99 | 1.44 | 82 |
| 12.0 | 1.2 | 0.0284 | 0.044 | 97 | 1.69 | 78 |
| 13.0 | 1.3 | 0.0281 | 0.044 | 96 | 1.93 | 77 |
| 14.0 | 1.4 | 0.0288 | 0.045 | 98 | 2.24 | 76 |
| 15.0 | 1.5 | 0.0279 | 0.043 | 98 | 2.48 | 75 |
| 16.0 | 1.6 | 0.0273 | 0.042 | 97 | 2.75 | 74 |
| 17.0 | 1.7 | 0.0264 | 0.041. | 97 | 2.90 | 71 |

**Table 14**

| Device No. 10-4 Discharge Data at 1000 Cycles | | | | | | |
|---|---|---|---|---|---|---|
| Voltage (V) | V per cell (V) | Capacity (F) | Capacitance (F/cm²) | Efficiency q (%) | Energy (J) | Efficiency e (%) |
| 10.0 | 1.0 | 0.0402 | 0.062 | 100 | 1.76 | 84 |
| 11.0 | 1.1 | 0.0405 | 0.063 | 100 | 2.14 | 82 |
| 12.0 | 1.2 | 0.0405 | 0.063 | 96 | 2.53 | 79 |
| 13.0 | 1.3 | 0.0418 | 0.065 | 96 | 3.03 | 79 |
| 14.0 | 1.4 | 0.0436 | 0.068 | 100 | 3.65 | 81 |
| 15.0 | 1.5 | 0.0444 | 0.069 | 99 | 4.24 | 79 |
| 16.0 | 1.6 | 0.0446 | 0.069 | 98 | 4.79 | 77 |
| 17.0 | 1.7 | 0.0411 | 0.064 | 98 | 4.85 | 74 |

### EXAMPLE 9

### Physical Properties of potassium chloride pursuant to its use as a neutral electrolyte

Aqueous Solubility -- The solubility of KCI in water at ambient temperature was determined. Solutions of KCI were prepared starting at 1.0M and ascending in 0.5M increments. The solubility limit was reached at 4.5 M where KCI precipitated out of solution upon cooling to ambient temperature.

Freezing Point -- The freezing point of solutions of KCI as a function of molarity was determined. A small amount of solution was drawn into a capillary tube, then one end was sealed. The capillary tube was mounted onto a rod thermocouple which measured the temperature next to the solution in the capillary tube. This assembly was suspended in a stirred IPA isopropylalcohol (IPA) bath. Liquid nitrogen was added to the IPA to lower the temperature of the bath. Freezing was sudden, rapid, and easily seen. The bath temperature at which the KCI solution froze was recorded this procedure was repeated approximately 10 times for each molarity of solution.

The third physical property to be measured was the conductivity of the above solutions. See Figure 34.

The data suggests that the optimum concentration of Potassium Chloride as a neutral electrolyte is 3.0 M, or lies somewhere between 3.0M and 3.5M concentration in terms of both lower freezing point and higher conductivity.

## Claims

1. A process to produce a high surface area niobium oxynitride, tantalum oxynitride, vanadium oxynitride, zirconium oxynitride, titanium oxynitride or molybdenum oxynitride coated substrate for use as an electrical energy storage component in a capacitor or a battery configuration, which process comprises:
(a) coating one or both flat etched surfaces of a solid substrate, which substrate is in the form of a thin sheet, with a solution or a slurry of a metal halide selected from niobium halide, tantalum halide, vanadium halide, zirconium halide, titanium halide or molybdenum halide and a liquid volatile carrier to produce a thin surface film;
(b) contacting the metal halide surface film-carrier coated substrate of step (a) with oxygen, air, or combinations thereof at a temperature of between about 150 and 250°C for between about 5 and 60 min to convert the metal halide to metal oxide, respectively, as a thin film and to remove the liquid volatile carrier;
(c) repeating steps (a) and (b) as needed to obtain an accumulated thickness of metal oxide coating on the substrate, which accumulated metal oxide coating has a high surface area and the liquid volatile carrier is removed;
(d) heating the metal oxide film coated substrate of step (c) in oxygen, air or combination thereof at between about 160 and 240°C for between about 1 and 3 hr to convert at least about 95% of the metal chloride to metal oxide;
(e) slowly increasing the temperature of the metal oxide coated substrate at a rate of less than about 40°C per minute in a nitrogen atmosphere to between about 500 to 800°C;
(f) contacting the oxide coated substrate produced in step (e) with a nitrogen source selected from excess flowing gaseous ammonia, a mixture of ammonia gas and hydrogen gas, or a mixture of hydrogen gas and nitrogen gas at between about 500 and 800°C for between 1 and 6 hr which treatment converts about 95% or greater of the oxide coating to an niobium oxynitride, tantalum oxynitride, vanadium oxynitride, zirconium oxynitride, titanium oxynitride or molybdenum oxynitride layer, respectively, on the substrate, which oxynitride layer has a high surface area and is electrically conductive; and
(g) cooling to ambient temperature and recovering the high surface area metal oxynitride coated substrate produced in step (f).

2. The process of Claim 1 wherein in step (a) the metal halide is molybdenum chloride, and a molybdenum oxynitride film is formed.

3. The process of Claim 1 wherein the substrate in step (a) is selected from iron, titanium, molybdenum, aluminum, copper, zirconium, nickel or combinations thereof.

4. The process of Claim 1 wherein the liquid volatile carrier is selected from ethanol, propanol, butanol, pentanol, hexanol, cyclohexanol, diethyl ether, dioxane, tetrahydrofuran, dimethylacetamide, diethylacetamide, acetone, methylethyl ketone, butanone, ethyl acetate, propyl acetate, methylene chloride, chloroform, carbon tetrachloride, benzene, toluene, xylene, or mixtures thereof.

5. The process of Claim 1 wherein:
in step (a) the metal halide is molybdenum chloride, and the substrate is selected from titanium, molybdenum, iron, aluminum, copper or combinations thereof and the liquid volatile carrier is isopropanol; and
in step (f) the nitrogen source is flowing ammonia, the temperature is between about 500 and 800°C for between about 1 and 6 hrs, and about 95% to 100% of the molybdenum oxide is converted to molybdenum oxynitride, and wherein the surface area is between about 10 and 60m²/g.

6. The process of Claim 1 wherein:
in step (a) the metal halide is titanium chloride and in step (f) titanium oxynitride is formed;
in step (a) the liquid volatile carrier is isopropanol;
in step (b) the temperature is between about 150 and 300°C and the time is between about 5 and 30 min.;
in step (c) the number of repeating steps is between 10 and 40;
in step (d) the temperature is between about 150 and 300°C and the time is between about 2 and 3 hr.;
in step (e) the rate of heating is about 40°C per minute to 700°C; and
in step (f) flowing gaseous ammonia with hydrogen is used at about 700°C for between about 3 and 5 hr; and
the substrate in step (a) is selected from iron, titanium, molybdenum, aluminum, copper, zirconium, nickel or combinations thereof.

7. The process of Claim 1 wherein:
in step (f) titanium oxynitride is formed having a BET specific surface area of between about 50 and 100 m²/g .

8. The process of Claim 1 wherein:
in step (a) the liquid volatile carrier is isopropanol
and the metal halide is selected from niobium chloride, tantalum chloride, vanadium chloride, or zirconium chloride;
in step (b) the temperature is between about 150 and 300°C and the time is between about 5 and 30 min.;
in step (c) the number of repeating steps is between 10 and 40;
in step (d) the temperature is between about 150 and 400°C and the time is between about 2 and 3 hr.;
in step (e) the rate of heating is about 40°C per minute to 800°C; and
in step (f) flowing gaseous ammonia is used at about 800°C for between about 3 and 5 hr, and
the substrate in step (a) is selected from iron, titanium, molybdenum, aluminum, copper or combinations thereof.

9. A process according to claim 1 wherein to improve the adhesion and cohesion of the high surface area metal oxynitride, the process comprises:
adding tantalum chloride or tantalum oxide to the metal oxynitride prior to drying, annealing or pyrolysis at elevated temperatures resulting in tantalum oxide in the product.

10. An electrical storage device containing an electrically conducting molybdenum oxynitride or titanium oxynitride coated substrate produced by the process of Claim 1.

11. An electrical storage device which has spaced electrodes of metal sheet coated with a thin layer of a metal oxynitride selected from molybdenum oxynitride and titanium oxynitride produced by the process of claim 1.

12. A high surface area electrode for use as a component in an electric energy storage device, which electrode comprises:
an electrically conducting metal foil substrate which is coated on one or both flat sides with a high surface area metal oxynitride selected from niobium oxynitride, tantalum oxynitride, vanadium oxynitride, zirconium oxynitride, titanium oxynitride and molybdenum oxynitride produced by the process of claim 1.

13. The electrode of Claim 11 wherein the substrate is selected from iron, titanium, molybdenum, aluminum, copper, zirconium, nickel and combinations thereof; and
the metal of the oxynitride is selected from niobium, titanium, tantalum, vanadium, zirconium and combinations thereof.

## Patentansprüche

1. Verfahren zur Herstellung eines mit Nioboxynitrid, Tantaloxynitrid, Vanadiumoxynitrid, Zirconiumoxynitrid, Titanoxynitrid oder Molybdänoxynitrid mit großer Oberfläche beschichten Substrats zur Verwendung als Speicherkomponente für elektrische Energie in einem Kondensator oder einer Batterieanordnung, wobei das Verfahren Folgendes umfasst:
(a) das Beschichten einer oder beider flachen geätzten Oberfläche(n) eines festen Substrats, wobei das Substrat in Form einer dünnen Platte vorliegt, mit einer Lösung oder einer Aufschlämmung aus einem Metallhalogenid, ausgewählt aus Niobhalogenid, Tantalhalogenid, Vanadiumhalogenid, Zirconiumhalogenid, Titanhalogenid oder Molybdänhalogenid, und einem flüssigen flüchtigen Träger, um einen dünnen Oberflächenfilm herzustellen;
(b) das zwischen etwa 5 und 60 min lange Kontaktieren des mit einem Metallhalogenidoberflächenfilmträger beschichteten Substrats aus Schritt (a) mit Sauerstoff, Luft oder Kombinationen davon bei einer Temperatur von zwischen etwa 150 und 250 °C, um das Metallhalogenid als dünnen Film in Metalloxid zu überführen und um den flüssigen flüchtigen Träger zu entfernen;
(c) das Wiederholen der Schritte (a) und (b), um eine akkumulierte Dicke einer Metalloxidbeschichtung auf dem Substrat zu erreichen, wobei die akkumulierte Metalloxidbeschichtung eine große Oberfläche aufweist und der flüssige flüchtige Träger entfernt ist;
(d) das 1 bis 3 h lange Erhitzen des mit einem Metalloxidfilm beschichteten Substrats aus Schritt (c) in Sauerstoff, Luft oder einer Kombination daraus bei zwischen etwa 160 und 240 °C, um zumindest etwa 95 % des Metallchlorids in Metalloxid zu überführen;
(e) das langsame Erhöhen der Temperatur des mit einem Metalloxid beschichteten Substrats auf zwischen etwa 500 bis 800 °C mit einer Geschwindigkeit von weniger als etwa 40 °C pro Minute in einer Stickstoffatmosphäre;
(f) das zwischen 1 und 6 h lange Kontaktieren des in Schritt (e) hergestellten oxidbeschichteten Substrats mit einer Stickstoffquelle, die aus im Überschuss strömendem gasförmigem Ammoniak, einem Gemisch aus Ammoniakgas und Wasserstoffgas oder einem Gemisch aus Wasserstoffgas und Stickstoffgas ausgewählt ist, bei zwischen etwa 500 und 800 °C, wobei die Behandlung etwa 95 % oder mehr der Oxidbeschichtung in eine Nioboxynitrid-, Tantaloxynitrid-, Vanadiumoxynitrid-, Zirconiumoxynitrid-, Titanoxynitrid- bzw. Molybdänoxynitridschicht auf dem Substrat überführt, wobei die Oxynitridschicht eine große Oberfläche aufweist und elektrisch leitend ist; und
(g) das Abkühlen auf Umgebungstemperatur und Gewinnen des in Schritt (f) hergestellten, mit einem Metalloxynitrid mit großer Oberfläche beschichteten Substrats.

2. Verfahren nach Anspruch 1, worin in Schritt (a) das Metallhalogenid Molybdänchlorid ist und ein Molybdänoxynitridfilm gebildet wird.

3. Verfahren nach Anspruch 1, worin das Substrat in Schritt (a) aus Eisen, Titan, Molybdän, Aluminium, Kupfer, Zirconium, Nickel oder Kombinationen daraus ausgewählt ist.

4. Verfahren nach Anspruch 1, worin der flüssige flüchtige Träger aus Ethanol, Propanol, Butanol, Pentanol, Hexanol, Cyclohexanol, Diethylether, Dioxan, Tetrahydrofuran, Dimethylacetamid, Diethylacetamid, Aceton, Methylethylketon, Butanon, Ethylacetat, Propylacetat, Methylenchlorid, Chloroform, Kohlenstofftetrachlorid, Benzol, Toluol, Xylol oder Gemischen daraus ausgewählt ist.

5. Verfahren nach Anspruch 1, worin
in Schritt (a) das Metallhalogenid Molybdänchlorid ist, das Substrat aus Titan, Molybdän, Eisen, Aluminium, Kupfer oder Kombinationen daraus ausgewählt ist und der flüssige flüchtige Träger Isopropanol ist; und
in Schritt (f) die Stickstoffquelle strömendes Ammoniak ist, die Temperatur zwischen etwa 1 und 6 h lang zwischen etwa 500 und 800°C beträgt und etwa 95 % bis 100 % des Molybdänoxids in Molybdänoxynitrid übergeführt werden und worin die Oberfläche zwischen etwa 10 und 60 m²/g beträgt.

6. Verfahren nach Anspruch 1, worin
in Schritt (a) das Metallhalogenid Titanchlorid ist und in Schritt (f) Titanoxynitrid gebildet wird;
in Schritt (a) der flüssige flüchtige Träger Isopropanol ist;
in Schritt (b) die Temperatur zwischen etwa 150 und 300°C und die Dauer zwischen etwa 5 und 30 min liegt;
in Schritt (c) die Anzahl an Wiederholungsschritten zwischen 10 und 40 liegt;
in Schritt (d) die Temperatur zwischen etwa 150 und 300 °C und die Dauer zwischen etwa 2 und 3 h liegt;
in Schritt (e) die Aufheizgeschwindigkeit auf 700 °C etwa 40 °C pro Minute beträgt;
in Schritt (f) strömendes gasförmiges Ammoniak mit Wasserstoff bei etwa 700 °C zwischen etwa 3 und 5 h lang verwendet wird; und
das Substrat in Schritt (a) aus Eisen, Titan, Molybdän, Aluminium, Kupfer, Zirconium, Nickel oder Kombinationen davon ausgewählt ist.

7. Verfahren nach Anspruch 1, worin
in Schritt (f) Titanoxynitrid mit einer spezifischen BET-Oberfläche zwischen etwa 50 und 100 m²/g gebildet wird.

8. Verfahren nach Anspruch 1, worin
in Schritt (a) der flüssige flüchtige Träger Isopropanol ist
und das Metallhalogenid aus Niobchlorid, Tantalchlorid, Vanadiumchlorid oder Zirconiumchlorid ausgewählt ist;
in Schritt (b) die Temperatur zwischen etwa 150 und 300 °C und die Dauer zwischen etwa 5 und 30 min liegt;
in Schritt (c) die Anzahl an Wiederholungsschritten zwischen 10 und 40 liegt;
in Schritt (d) die Temperatur zwischen etwa 150 und 400 °C und die Dauer zwischen etwa 2 und 3 h liegt;
in Schritt (e) die Aufheizgeschwindigkeit auf 800 °C etwa 40 °C pro Minute beträgt;
in Schritt (f) strömendes gasförmiges Ammoniak mit Wasserstoff bei etwa 800 °C zwischen etwa 3 und 5 h lang verwendet wird; und
das Substrat in Schritt (a) aus Eisen, Titan, Molybdän, Aluminium, Kupfer oder Kombinationen davon ausgewählt ist.

9. Verfahren nach Anspruch 1, worin zur Verbesserung der Adhäsion und Kohäsion des Metalloxynitrids mit großer Oberfläche das Verfahren Folgendes umfasst:
den Zusatz von Tantalchlorid oder Tantaloxid zum Metalloxynitrid vor der Trocknung, Anellierung oder Pyrolyse bei höheren Temperaturen, was zu Tantaloxid im Produkt führt.

10. Elektrische Speichervorrichtung, die ein elektrisch leitendes, mit Molybdänoxynitrid oder Titanoxynitrid beschichtetes Substrat enthält, die durch ein Verfahren nach Anspruch 1 hergestellt wurde.

11. Elektrische Speichervorrichtung, die beabstandete Elektroden aus einer Metallplatte enthält, die mit einer dünnen Schicht aus einem Metalloxynitrid beschichtet sind, das aus durch ein Verfahren nach Anspruch 1 hergestelltem Molybdänoxynitrid und Titanoxynitrid ausgewählt ist.

12. Elektrode mit großer Oberfläche zur Verwendung als Komponente in einer elektrischen Speichervorrichtung, wobei die Elektrode Folgendes umfasst:
ein elektrisch leitendes Metallfoliensubstrat, das auf einer oder beiden flachen Seite(n) mit einem Metalloxynitrid mit großer Oberfläche, ausgewählt aus durch ein Verfahren nach Anspruch 1 hergestelltem Nioboxynitrid, Tantaloxynitrid, Vanadiumoxynitrid, Zirconiumoxynitrid, Titanoxynitrid und Molybdänoxynitrid, beschichtet ist.

13. Elektrode nach Anspruch 11, worin das Substrat aus Eisen, Titan, Molybdän, Aluminium, Kupfer, Zirconium, Nickel und Kombinationen davon ausgewählt ist; und
das Metall des Oxynitrids aus Niob, Titan, Tantal, Vanadium, Zirconium und Kombinationen davon ausgewählt ist.

## Revendications

1. Procédé de production d'un substrat enduit d'oxynitrure de nobium, oxynitride de tantale, oxynitrure de vanadium, oxynitrure de zirconium, oxynitrure de titane ou oxynitrure de molybdène, de grande aire superficielle, pour une utilisation comme composant de stockage d'énergie électrique dans une configuration de condensateur ou batterie, lequel procédé comprend:
(a) le revêtement d'une ou plusieurs surfaces attaquées plates d'un substrat solide, lequel substrat est sous la forme d'une feuille mince, au moyen d'une solution ou d'une bouillie d'un halogénure de métal sélectionné parmi halogénure de nobium, halogénure de tantale, halogénure de vanadium, halogénure de zirconium, halogénure de titane ou halogénure de molybdène et un support volatil liquide pour produire un film mince de surface;
(b) mise du substrat enduit d'un support en film de surface d'halogénure de métal de l'étape (a) en contact avec de l'oxygène, de l'air ou de leurs combinaisons à une température comprise entre environ 150 et 250°C pendant environ 5 à 60 minutes pour convertir l'halogénure de métal en oxyde de métal, respectivement, sous la forme d'un film mince et pour éliminer le support volatil liquide;
(c) répétition des étapes (a) et (b) selon la nécessité pour obtenir une épaisseur accumulée du revêtement d'oxyde de métal sur le substrat, lequel revêtement accumulé d'oxyde de métal a une grande aire superficielle et le support volatil liquide est éliminé;
(d) chauffage du substrat enduit du film d'oxyde de métal de l'étape (c) à l'oxygène, à l'air ou à une combinaison de ceux-ci, entre environ 160 et 240°C pendant environ 1 à 3 heures pour convertir au moins environ 95% du chlorure de métal en oxyde de métal;
(e) augmentation lente de la température du substrat enduit de l'oxyde de métal à une allure de moins d'environ 40°C par minute dans une atmosphère d'azote jusqu'à entre environ 500 à 800°C;
(f) mise du substrat enduit de l'oxyde de métal produit à l'étape (a) en contact avec une source d'azote sélectionnée parmi de l'ammoniaque gazeuse en écoulement en excès, un mélange d'ammoniaque gazeuse et d'hydrogène gazeux ou un mélange d'hydrogène gazeux et d'azote gazeux entre environ 50 et 800°C pendant 1 à 6 heures, lequel traitement convertit environ 95% ou plus du revêtement d'oxyde en un oxynitrure de nobium, oxynitrure de tantale, oxynitrure de vanadium, oxynitrure de zirconium, oxynitrure de titane ou oxynitrure de molybdène, respectivement, sur le substrat, laquelle couche d'oxynitrure a une grande aire superficielle et est électriquement conductrice;
(g) refroidissement à température ambiante et récupération le substrat enduit d'oxynitrure de métal de grande aire superficielle produit à l'étape (f).

2. Procédé de la revendication 1, où à l'étape (a) l'halogénure de métal est du chlorure de molybdène et un film d'oxynitrure de molybdène est formé.

3. Procédé de la revendication 1, où le substrat à l'étape (a) est sélectionné parmi fer, titane, molybdène, aluminium, cuivre, zirconium, nickel ou leurs combinaisons.

4. Procédé de la revendication 1, où le support volatil liquide est sélectionné parmi éthanol, propanol, butanol, pentanol, hexanol, cyclohexanol, diéthyl éther, dioxane, tétrahydrofuranne, diméthylacétamide, diéthylacétamide, acétone, méthyléthyl cétone, butanone, acétate d'éthyle, acétate de propyle, chlorure de méthylène, chloroforme, tétrachlorure de carbone, benzène, toluène, xylène ou leurs mélanges.

5. Procédé de la revendication 1, où:
à l'étape (a), l'halogénure de métal est du chlorure de molybdène et le substrat est sélectionné parmi titane, molybdène, fer, cuivre ou leurs combinaisons et le support volatil liquide est l'isopropanol;
à l'étape (f), la source d'azote est de l'ammoniaque en écoulement, la température est comprise entre environ 500 et 800°C pendant environ 1 à 6 heures et environ 95 à 100% de l'oxyde de molybdène est converti en oxynitrure de molybdène et où l'aire superficielle est comprise entre environ 10 et 60 m²/g.

6. Procédé de la revendication 1, où:
à l'étape (a), l'halogénure de métal est du chlorure de titane et à l'étape (f), de l'oxynitrure de titane est formé;
à l'étape (a), le support volatil liquide est de l'isopropanol;
à l'étape (b), la température est comprise entre environ 150 et 300°C et le temps est compris entre environ 5 et 30 minutes;
à l'étape (c), le nombre d'étapes récurrentes est compris entre 10 et 40;
à l'étape (d), la température est comprise entre environ 150 et 300°C et le temps est compris entre environ 2 et 3 heures;
à l'étape (d), l'allure de chauffage est d'environ 40°C par minute à 700°C; et
à l'étape (f), l'ammoniaque gazeuse en écoulement avec l'hydrogène est utilisée à environ 700°C pendant environ 3 à 5 heures; et
le substrat de l'étape (a) est sélectionné parmi fer, titane, molybdène, aluminium, cuivre, zirconium, nickel ou leurs combinaisons.

7. Procédé de la revendication 1 où:
à l'étape (f), de l'oxynitrure de titane est formé ayant une aire superficielle spécifique BET comprise entre environ 50 et 100 m²/g.

8. Procédé de la revendication 1 où:
à l'étape (a), le support volatil liquide est isopropanol
et l'halogénure de métal est sélectionné parmi chlorure de nobium, chlorure de tantane, chlorure de vanadium ou chlorure de zirconium;
à l'étape (b), la température est comprise entre environ 150 et 300°C et le temps est compris entre environ 5 et 30 minutes,
à l'étape (c), le nombre d'étapes récurrentes est compris entre 10 et 40;
à l'étape (d), la température est comprise entre environ 150 et 400°C et le temps est compris entre environ 2 et 3 heures;
à l'étape (e), l'allure de chauffage est d'environ 40°C par minute à 800°C; et
à l'étape (f), l'ammoniaque gazeuse en écoulement est utilisée à environ 800°C pendant environ 3 à 5 heures, et
le substrat de l'étape (a) est sélectionné parmi fer, titane, molybdène, aluminium, cuivre ou leurs combinaisons.

9. Procédé selon la revendication 1 où, pour améliorer l'adhérence et la cohérence de l'oxynitrure de métal de grande aire superficielle, le procédé comprend:
l'addition de chlorure de tantale ou d'oxyde de tantale à l'oxynitrure de métal avant séchage, recuit ou pyrolyse à températures élevées avec pour résultat de l'oxyde de tantale dans le produit.

10. Dispositif de stockage électrique contenant un substrat enduit d'oxynitrure de molybdène ou oxynitrure de titane électriquement conducteur produit par le procédé de la revendication 1.

11. Dispositif de stockage électrique qui a des électrodes espacées d'une feuille de métal enduite d'une couche mince d'un oxynitrure de métal sélectionné parmi oxynitrure de molybdène et oxynitrure de titane produit par le procédé de la revendication 1.

12. Electrode de grande aire superficielle à utiliser comme composant dans un dispositif de stockage d'énergie électrique, laquelle électrode comprend:
un substrat en feuille en métal électriquement conducteur qui est enduit sur l'une ou les deux faces plates d'un oxynitrure de métal de grande aire superficielle sélectionné parmi oxynitrure de nobium, oxynitrure de tantale, oxynitrure de vanadium, oxynitrure de zirconium, oxynitrure de titane et oxynitrure de molybdène produit par le procédé de la revendication 1.

13. Electrode de la revendication 11 où le substrat est sélectionné parmi fer, titane, molybdène, aluminium, cuivre, zirconium, nickel et leurs combinaisons; et
le métal de l'oxynitrure est sélectionné parmi nobium, titane, tantale, vanadium, zirconium et leurs combinaisons.
